(19) Europäisches Patentamt
European Patent Office
Office européen des brevets

(11) **EP 1 990 851 A2**

(12) **EUROPEAN PATENT APPLICATION**

(43) Date of publication:
**12.11.2008 Bulletin 2008/46**

(51) Int Cl.:
***H01M 4/58*** *(2006.01)*

(21) Application number: **08013270.7**

(22) Date of filing: **15.03.2001**

(84) Designated Contracting States:
**DE FR GB**

(30) Priority: **16.03.2000 JP 2000073453**

(62) Document number(s) of the earlier application(s) in accordance with Art. 76 EPC:
**01106598.4 / 1 134 827**

(71) Applicant: **Sony Corporation**
**Tokyo 108-0075 (JP)**

(72) Inventors:
- **Omaru, Atsuo,**
  **c/o Sony Fukishima Corporation,**
  **Koriyama-shi, Fukushima (JP)**
- **Fujishige, Yusuke**
  **Tokyo, 108-0075 (JP)**

(74) Representative: **Müller - Hoffmann & Partner**
**Patentanwälte**
**Innere Wiener Strasse 17**
**81667 München (DE)**

Remarks:
This application was filed on 23-07-2008 as a divisional application to the application mentioned under INID code 62.

(54) **Non-aqueous electrolyte secondary battery and method of preparing carbon-based material for negative electrode**

(57) A non-aqueous electrolyte secondary battery with a high capacity in which irreversible capacity is decreased, and formation of a coating caused by irreversible reaction, and a method of preparing a preferable carbon-based material for the negative electrode. A negative electrode of the secondary battery is produced using; graphite in which $G_s$ ($G_s = H_{sg}/H_{sd}$) is 10 and below in the surface enhanced Raman spectrum, graphite having at least two peaks on a differential thermogravimetric curve, graphite with the saturated tapping density of 1.0 g/cm$^3$ and more, graphite with the packing characteristic index of 0.42 and more, or graphite with the ratio of a specific surface area after pressing being 2.5 times and below of that before pressing. The graphite material can be obtained by mixing a carbon-based material with a coating material such as pitch or by applying a heat treatment to a carbon-based material in an oxidizing atmosphere and then performing graphitization.

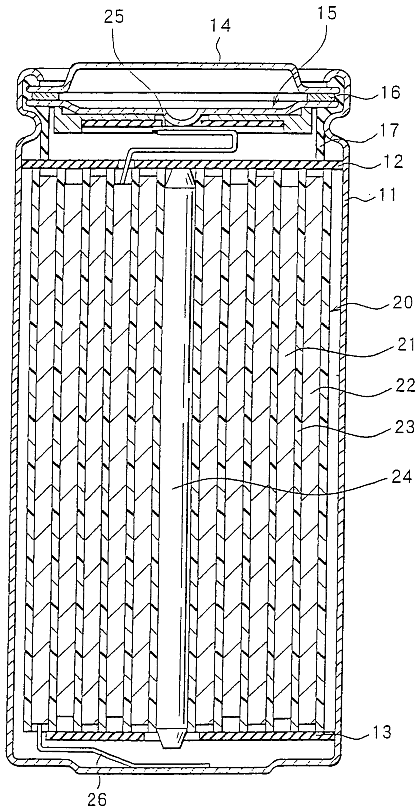


FIG.1

EP 1 990 851 A2

## Description

BACKGROUND OF THE INVETION

1. Field of the Invention

The present invention relates to a secondary battery having a negative electrode made of a carbon-based material capable of occluding and releasing lithium ions, specifically, a non-aqueous electrolyte secondary battery and a method of preparing the carbon-based material for the negative electrode.

2. Description of the Related Art

Recently, electronic devices such as cellular phones, PDAs and notebook computers have been rapidly made miniaturized and portablized. In association with this, secondary batteries used for the devices are demanded to have high energy. Examples of the secondary batteries of the related art are a lead battery, a Ni(nickel)-Cd(cadmium) battery and a Ni(nickel)-Mn(manganese) battery, which have low discharge voltage and insufficient energy density. On the other hand, lithium secondary batteries have been put in practical use in which a metal lithium, a lithium alloy or a carbon material capable of occluding and releasing lithium ions electrochemically is used as a negative electrode active material being combined with a variety of positive electrodes. The battery voltage of this kind of battery is high and the energy density per weight or volume is high compared to those of the batteries of the related art.

The lithium secondary battery was initially studied in a system using a metal lithium or lithium alloy as a negative electrode. However, it has not been put in practical use with an exception since there are problems such as insufficient charging/discharging efficiency and deposition of dendrite. A carbon material capable of occluding and releasing lithium ions electrochemically has been studied and realized to be used as the material for a negative electrode.

With a negative electrode made of a carbon material, no dendrite of metal lithium or no powdered alloy is formed at the time of charging and discharging unlike the case of the negative electrode made of a metal lithium or a lithium alloy. Furthermore, Coulomb efficiency is high so that a lithium secondary battery with an excellent charging/discharging reversibility can be formed. No deposition of dendrite leads to high safety as well as high battery characteristic. The battery is what we call a lithium ion battery and is being commercialized by being combined with a positive electrode made of a composite oxide containing lithium.

In general, in a lithium ion battery, a carbon material is used for the negative electrode, $LiCoO_2$ for the positive electrode and a non-aqueous electrolyte made of a non-aqueous solvent for the electrolyte. The carbon material used for the negative electrode is classified roughly as follows: a graphite material which is produced as an ore and can now be artificially produced; a graphitizing carbon material which is a precursor of the artificial graphite material; and a non-graphitizing carbon material which does not become graphite even at a temperature high enough for graphite to be artificially formed. In general, the graphite material and the non-graphitizing carbon material are used in view of the capacity of the negative electrode. Increase in the capacity of the lithium ion battery in accordance with the increase in the electric current consumption of electric devices due to miniaturization and multi-functionalization has been remarkably advanced by increase in the capacity of the graphite material.

The charging/discharging mechanism of the graphite material can be described by formation of Li(lithium)-graphite intercalation compound (Li-GIC) by lithium intercalation into between the layers of the graphite and dissolving the intercalation compound due to release of lithium. Except the time of charging and discharging, lithium exists as ion in the electrolyte since the surface energy of the graphite material is high. The solvent molecules of the electrolyte are solvated therein. At the time of charging, lithium ion is to be released from the solvation for intercalation into the interlayer of the graphite. However, the reactive characteristic near the surface of the graphite layer is high at the first time of lithium intercalation so that the solvent is degraded. The degradation of the electrolyte solvent at the first time of charging causes the formation of a coating over the negative electrode, and electricity is consumed therefor. The electricity thus consumed becomes irreversible capacity, resulting in decrease in battery capacity.

Presumably, the surface activity of the graphite layer is due to the difference in electronic structures of the surface of the graphite particles. Control of the electronic structure is a subject to be considered. In a method of defining the surface structure of the related art (disclosed in, for example, Japanese Patent Application Laid-open Hei 9-171815, Japanese Patent Application Laid-open Hei 9-237638, Japanese Patent Application Laid-open Hei 11-31511), however, the surface itself, in the strict sense of the word, is not characterized in a proper manner. Therefore, the surface activity is not sufficiently understood so that suppressing formation of a coating is insufficient. The reason is that, in the methods, the surface and inside of the graphite particles are not considered to be a continuum but simply different reactive phases made of different materials.

## SUMMARY OF THE INVENTION

The invention has been designed to overcome the foregoing problems. An object of the invention is to provide a non-aqueous electrolyte secondary battery with a high capacity in which the irreversible capacity is decreased and formation of a coating caused by irreversible reaction on the surface at the time of first charging is suppressed, and a method of preparing a carbon-based material for the negative electrode suitable to be used in the secondary battery.

A non-aqueous electrolyte secondary battery of the invention comprises a negative electrode containing graphite described below. That is; graphite in which $G_s$ denoted by $G_s = H_{sg}/H_{sd}$ (where $H_{sg}$ is the height of a signal having a peak within the range of 1580 $cm^{-1}$ to 1620 $cm^{-1}$, both inclusive, and $H_{sd}$ is the height of a signal having a peak within the range of 1350 $cm^{-1}$ to 1400 $cm^{-1}$, both inclusive) in the surface enhanced Raman spectrum is 10 and below, graphite having at least two peaks on a differential thermogravimetric curve obtained by TG analysis in an airflow, graphite with a saturated tapping density of 1.0 $g/cm^3$ and more, graphite with a packing characteristic index of 0.42 and more, and graphite with the ratio of a specific surface area after pressing being 2.5 times and below of that before pressing.

In a non-aqueous electrolyte secondary battery of the invention, the structural difference in the structures of the outermost surface and the inside of the graphite particle in the negative electrode is defined quantitatively. Thereby, the surface activity of the negative electrode is suppressed and the irreversible capacity is decreased. Also, the saturated tapping density, packing characteristic index and a specific surfaced area of the graphite particles in the negative electrode are defined. Therefore, decrease in the reversible capacity of the negative electrode can be prevented and the irreversible capacity is decreased.

A method of preparing a carbon-based material for a negative electrode of the invention includes steps of: mixing a coating material made of one of pitch containing free carbon, pitch with a quinoline insoluble matter content of 2 % and more, or polymer with a carbon-based material made of at least either one of mesocarbon microbeads grown at a temperature within the range of the formation temperature to 2000 °C, both inclusive, and a carbon material; and graphitizing the carbon-based material with which the coating material is mixed. The method also includes steps of: applying a heat treatment in an oxidizing atmosphere on a carbon-based material made of at least either one of mesocarbon microbeads grown at a temperature within the range of the formation temperature to 2000 °C, both inclusive, and a carbon material; and graphitizing the carbon-based material. Furthermore, the method includes a step of applying a heat treatment on graphite particles in an inert atmosphere where more than a specific concentration of an organic substance is diffused.

In a method of preparing a carbon-based material for a negative electrode, high-crystalline graphite particles are covered with an amorphous coating. Therefore, the surface activity is suppressed and the irreversible capacity is decreased in the material for a negative electrode prepared by the method.

Other and further objects, features and advantages of the invention will appear more fully from the following description.

## BRIEF DESCRIPTION OF THE DRAWINGS

Fig. 1 is a cross section showing the structure of a secondary battery according to the embodiments of the invention.

Fig. 2 shows charging/discharging efficiency at $G_s$ value in the examples and the comparative examples of the invention.

Fig. 3 shows battery capacity at a specific saturated tapping density in the examples and the comparative examples of the invention.

Fig. 4 shows the cycle retention characteristic at the ratio of changes in a specific surface area after pressing in the examples and the comparative examples of the invention.

Fig. 5 shows surface enhanced Raman spectra according to the embodiment of the invention.

Fig. 6 shows TG curve and DTG curve obtained by TG analysis according to the embodiment of the invention.

## DETAILED DESCRIPTION OF THE PREFERRED EMBODIMENTSE

In the followings, embodiments of the invention will be described in detail by referring to the drawings.

Fig. 1 is a cross section showing the configuration of a secondary battery according to an embodiment of the invention. The secondary battery is of what is called a cylindrical type. In a battery can 11 having a substantially hollow cylindrical column shape, a rolled electrode body 20 obtained by rolling, around a center pin 24, a band-shaped positive electrode 21 and negative electrode 22 with a separator 23 interposed therebetween is provided. The battery can 11 is made of, for example, iron (Fe) plated with nickel (Ni). One end of the battery can 11 is closed and the other end is open. A pair of insulating plates 12 and 13 are placed vertical to the peripheral face of the roll so as to sandwich the rolled

electrode body 20.

A battery cover 14, and a safety valve mechanism 15 and a PTC (positive temperature coefficient) device 16 which are provided inside the battery cover 14 are attached to the open end of the battery can 11 by being caulked together with a gasket 17 in between and the battery can 11 is sealed.

A positive electrode lead 25 made of aluminum or the like is connected to the innermost periphery of the positive electrode 21. The tip of the positive electrode lead 25 is lead out from the rolled electrode body 20 and is electrically connected to the battery cover 14 by being welded to the safety valve mechanism 15. On the other hand, a negative electrode lead 26 made of nickel or the like is connected to the outermost periphery of the negative electrode 22. The tip of the negative electrode lead 26 is lead out from the rolled electrode body 20 and is electrically connected to the battery can 11 by being welded thereto.

A carbon-based material for the negative electrode used for the negative electrode of the secondary battery will be described hereinafter by referring to each embodiment. Furthermore, a method of preparing the carbon-based material for the negative electrode according to the embodiments and a method of manufacturing a secondary battery using the material will be described.

(First Embodiment)

A carbon-based material for the negative electrode according to a first embodiment can remarkably reduce irreversible capacity at the time of first charging by controlling the value of properties showing the electronic structure of the surface within the best suitable range, which has a very close correlation to the surface activity of the graphite particles. In this application, as the value of properties, the degree of graphitization $G_s$ expressed by the following formula 1 which is obtained by a surface enhanced Raman spectrum using argon laser is defined. Herein, $G_s$ is defined to be 10 and below.

$$G_s = H_{sg} / H_{sd} \qquad (1)$$

(where $H_{sg}$ denotes the height of a signal having a peak within the range of 1580 $cm^{-1}$ to 1620 $cm^{-1}$, both inclusive, and $H_{sd}$ denotes the height of a signal having a peak within the range of 1350 $cm^{-1}$ to 1400 $cm^{-1}$, both inclusive)

The surface enhanced Raman spectroscopy to which Raman spectroscopy is applied is a method of measuring the structure of the surface of a sample by depositing a metal film such as silver or gold on the sample surface. Measurements can also be made on metallic sol particles other than solid metal. In a Raman spectrum of the graphite material measured by the method, a peak near 1580 to 1620 $cm^{-1}$ ($P_{sg}$) indicating vibration mode due to the graphite crystalline structure and a peak near 1350 to 1400 $cm^{-1}$ ($P_{sd}$) indicating vibration mode due to the random structure of amorphous can be obtained. Fig. 5 shows an example of a Raman spectrum of the graphite material. $G_s$, which is the ratio of $P_{sg}$ intensity (height $H_{sg}$) and $P_{sd}$ intensity (height $H_{sd}$), denotes the degree of graphitization of the outermost surface. The actual measurement is performed on, for example, the graphite to which silver of 10 nm is deposited by a Raman spectroscope with wavenumber resolution of 4 $cm^{-1}$ using argon laser with a wavelength of 514.5 nm.

The graphite material defined as described has a graphite crystalline structure inside the particles as a base material and an amorphous random structure on the surface as a coating material (in a strict sense, not in a state of two phases but as a structure continuously changing in the direction of the diameter of the particles). The surfaces of the graphite particles are sufficiently covered with amorphous provided $G_s$ is 10 and below.

In the embodiment, $G_s$ obtained by the surface enhanced Raman spectrum using argon laser is defined as the value within a specific range so as to define the value of properties showing the surface electronic structure which correlates to the surface activity of the graphite material. Thereby, the battery in which the graphite material is used for the negative electrode can remarkably reduce irreversible capacity at the time of first charging as shown in the result of the experiment which will be described later. Preferably, the value of $G_s$ lies within the range of 0.4 to 6.0, both inclusive, and more preferably within the range of 0.7 to 4.0, both inclusive.

(Second Embodiment)

In a carbon-based material for the negative electrode according to a second embodiment, the difference in the structures of the inside and the outermost surface of the particles is defined quantitatively. In other words, while a Raman spectrum shows the difference in the surface structure qualitatively, the surface structure is further defined quantitatively by using the phenomenon that carbon burns in an oxidizing atmosphere.

Combustion of carbon is, for example, bonding of oxygen with the end of the structure of hexagonal carbon layer for elimination as carbon monoxide or carbon dioxide. The combustion conduct differs due to the difference in the

carbon structure so that carbon with a specific structure burns at a specific temperature. TG analysis (thermogravimetric analysis) is performed for the measurement.

A TG curve obtained by TG analysis shows combustion temperature dependency of the proportion of weight reduction (%). Although classification of the combustion process can be read from the TG curve, a DTG curve which is a differentiation of the TG curve is used herein, as is the general practice. The graphite material according to the embodiment is defined to have two or more peaks in the DTG curve including peaks corresponding to the structures of the inside and the outermost surface of the particles. Fig. 6 shows an example of the TG curve and the DTG curve obtained by performing, TG analysis of the graphite material. As will be shown in the result of the experiment later, the proportion of weight reduction due to the component other than the graphite inside the particles, which can be obtained by the DTG curve, is preferable to lie within the range of 5 % to 40 %, both inclusive, relatively to the component inside the particles. It is more preferable to lie within the range of 9 % to 30 %, both inclusive, and most preferable within the range of 11 % to 25 %, both inclusive.

Furthermore, the reform rate is defined as a value obtained by dividing the quantity of weight reduction obtained by the DTG curve by a specific surface area of the particles. The reform rate represents the reformed portion on the particle surface and correlates to the irreversible capacity. The reform rate is preferable to lie within the range of 1 to 38, both inclusive. The graphite material defined by the DTG curve and the reform rate has a structure in which a component having a different structure from the inside of the particles sufficiently covers the surface of the particles to form the reformed portion.

In the embodiment, the graphite material is defined so that there are two or more peaks on the DTG curve obtained by TG analysis. Thereby, irreversible capacity of a battery using the graphite material for the negative electrode can be remarkably reduced. The starting temperature of weight reduction in the TG measurement changes according to the rate of increasing temperature. For example, when the rate of increasing temperature is 2 °C per minute, the starting temperature of weight reduction is preferable to be 300 °C and more, more preferable to be 400 °C and more, and most preferable to be 500 °C and more.

In order to achieve reduction in the irreversible capacity and substantially high capacity by maintaining the structure of the above-mentioned graphite particles after using it for the negative electrode and maintaining or increasing the irreversible capacity, a saturated tapping density, a packing characteristic and a specific surface area of the graphite material are further to be defined.

(Third Embodiment)

The saturated tapping density is a saturation value of density which does not further increase by tapping and is defined as follows in this application. The packing characteristic is a value obtained by dividing the saturated tapping density by a true density and is defined as the characteristic of packing (hereinafter referred to as a packing characteristic index) as follows in this application. The higher the values are, the more improved the capacity density per volume can be.

The tapping density can be measured as follows. First, the graphite powder provided in a test tube of, for example, 30 mm in diameter is placed in a tap-tester, which is to measure reduction of powder by tapping, (tapping-type, TMP-3; Tsutsui Scientific Instruments Co., Ltd.), and is tapped a given number of times. Then, the volume of the graphite powder is obtained and the tapping density is calculated by dividing the weight of the graphite powder by the volume. Incidentally, in many cases in the related art, the packing characteristic index of the graphite powder is defined by a bulk density by tapping. However, the bulk density does not indicate the packing characteristic in the strict sense since the true density changes in accordance with the change of particle crystalline in practice. Also, since the number of times tapping is performed is small, it is difficult to assume the state of being actually packed as an electrode on the basis of the measurement of the bulk density.

The saturated tapping density obtained in this manner as the saturation value of the tapping density is defined to be 1.0 $g/cm^3$ and more in this application. The saturated tapping density is more preferable to be 1.15 $g/cm^3$ and more, and most preferable to be 1.2 $g/cm^3$ and more.

The packing characteristic index obtained from the saturated tapping density is defined to be 0.42 and more. The packing characteristic index is more preferable to be 0.5 and more, and is most preferable to be 0.55 and more.

In addition, when the tapping density in tapping a predetermined number of times (for example, 40 times), i.e. the unsaturated tapping density, becomes higher, a pressure at the time of forming an electrode can be made lower. When obtaining the unsaturated tapping density, the number of times tapping is performed is desired to be less than 50 times; the tapping density is preferable to be 1.0 $g/cm^3$ and more, more preferable to be 1.1 $g/cm^3$ and more and most preferable to be 1.2 $g/cm^3$ and more. The higher the unsaturated tapping density is, the lower the pressure at the time of forming the electrode can be. Therefore, damages on the structure of the graphite material can be lessened. As a result, the reliability of the battery using the material, such as the cycle characteristic, can be improved.

In the embodiment, the saturated tapping density and the packing characteristic index are defined as an indicator of the mechanical packing characteristic at the time of forming a negative electrode, and the graphite material is defined

so that these values lie within specific ranges. Therefore, a negative electrode with higher packing capacity can be formed by using the graphite material.

(Fourth Embodiment)

When manufacturing the electrode, if the surface structure (coating) of the graphite particles is destroyed at the time of pressing, the effects provided by the coating is decreased. In order to prevent distortion and destruction of the structure due to pressing, the specific surface area is defined as an indicator of the practical strength of the graphite. First, the specific surface area of the graphite powder before pressing is measured and the graphite powder is formed to a predetermined shape with a pressure within the range of, for example, 100 $Kg/cm^2$ to 200 $Kg/cm^2$, both inclusive. Then, the specific surface area of the graphite in a powder state after pressing is measured. Although the pressure at the time of pressing depends on the methods of pressing, the pressure is desired to be sufficiently high since the purpose is to obtain a high-density electrode.

As shown later in the result of the experiment, when the specific surface area of the graphite after pressing is 2.5 times and below of that before pressing, the irreversible capacity can be sufficiently improved. The change in the specific surface areas before and after pressing is more preferable to be 2 times and below, and most preferable to be 1.6 times and below.

In the embodiment, the structural change of the material at the time of forming an electrode can be decreased by defining the specific surface area after pressing as a fixed value with respect to the specific surface area before pressing. Thereby, the surface structure can be easily maintained. Thus, in the battery having a negative electrode using the graphite material, deterioration in the irreversible capacity and the charging/discharging cycle characteristic can be decreased.

(Fifth Embodiment)

The capacity of the negative electrode depends not only on the surface electronic structure of the graphite particles but also on the crystalline. In the embodiment, as an indicator of the crystalline of the graphite material, the interlayer spacing distance d (002) crystal planes obtained by powder X-ray diffractometry is defined to be 0.3363 nm and below. The interlayer spacing distance d (002) planes is more preferable to be 0.3360 nm and below, and most preferable to be 0.3358 nm and below.

In the embodiment, the interlayer spacing distance d (002) planes is defined to be 0.3363 nm and below. Therefore, in the negative electrode made of the graphite material with high crystalline, the irreversible capacity is remarkably decreased and high reversible capacity can be obtained.

The graphite material defined in the above-mentioned embodiments can be prepared by the following methods.

(First method of preparing graphite)

First, mesocarbon microbeads are grown in tar or pitch which have been heated to a temperature in the range of about 400 °C, which is the formation temperature, to 2000 °C, which is the temperature of graphitization, both inclusive. In addition to coal tar pitch, petroleum pitch, synthetic pitch or the like can also be used.

The surface of the mesocarbon microbeads is covered by applying free carbon to the precursor in which mesocarbon microbeads are grown to a size of about 1 mm and more. Examples of coating methods are a method of spraying pitch containing free carbon while flowing the precursor particles of mesocarbon microbeads, and a spray-dry method (pitch treatment). In the beginning, the temperature of pitch is controlled to be in the range of softening point to the solidification temperature, both inclusive. Then, free carbon is fixed by removing the remained solvent. At this time, the temperature is increased to a point where pitch is cracked and solidified. An inert atmosphere is preferable. An oxidizing atmosphere to some extent is also preferable since the surface of the coated particles becomes high in liquidity and easy to be handled by thermosetting of oxygen bridging or the like. A carbon-based material for a negative electrode which is graphite particles with coatings can be obtained by performing graphitization thereafter.

At this time, if a heat treatment is applied in an oxidizing atmosphere before graphitization of the mesocarbon microbead precursors to which free carbon is fixed for coating, uneven coating due to poor fixing is decreased. Examples of an oxidizing atmosphere are oxygen at a concentration of 20 % and more, ozone, or $NO_2$. One or more kinds of these can be used.

If an oxidation treatment is performed by any one or more methods selected from the group consisting of an acid treatment, an ozone treatment and air oxidation before performing the above-mentioned pitch treatment on the mesocarbon microbead precursors, the coating can be fixed more firmly.

Solvent separation or grinding of mesocarbon microbeads can be performed before or after the fixing of free carbon for coating. In addition to pitch containing free carbon, pitch with a quinoline insoluble matter content of 2 % and

more can be used. The content is more preferable to be 5 % and more, and most preferable to be 10 % and more. Also, pitch with which carbon black having a small particle size is mixed can be used. In this case, the smaller the particle size is, the better. Specifically, the particle size is preferable to be 0.5 μm and below. Also, fixing of free carbon for coating can be performed in the same manner on bulk mesophase, which is formed by mesocarbon microbeads further being grown and united, and on a carbon material before graphitization to which a heat treatment is applied at 2000 °C and below.

The steps described above can be repeated twice or more where applicable in order to obtain an excellent surface electronic structure of the graphite particles.

(Second method of preparing graphite)

In this method, graphite particles are placed in an inert atmosphere in which an organic substance is diffused at a specific concentration and more and a heat treatment is applied thereon. Thereby, the surface of the graphitized particles can be reformed.

It is necessary to use a compound at least including a benzene ring structure shown in Chemical Formula 1 as the organic substance to be diffused. The higher carbonization yield the organic substance to be diffused has, the more excellent for an industrial use. The more benzene rings the organic substance to be diffused has, the higher the yield becomes.

[Chemical Formula 1]

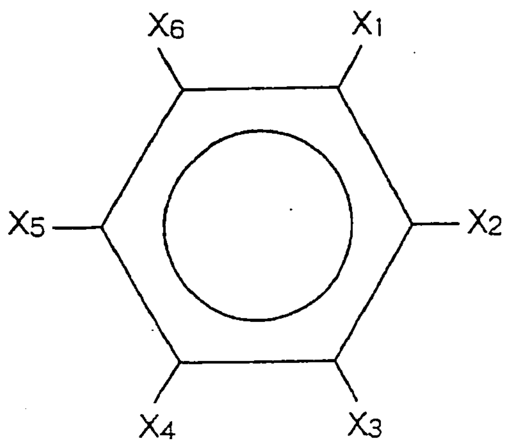

(where each of $X_1$ to $X_6$ denotes any functional group selected from the group consisting of H, $C_aH_b$ (a ≥ 1, b ≥ 3), OH, $O_aC_bH_c$ (a ≥ 1, b ≥ 1, c ≥ 3), $NO_2$, $NH_2$, $SO_3H$ and a halogen element)

A benzenoid compound is preferable to contain a compound including a bond of oxygen. In order to have a more random structure, it is preferable to use a compound containing other elements such as S, N or P instead of C.

Also, it is necessary to at least use a nonbenzenoid compound represented by Chemical Formula 2 as an organic substance to be diffused.

$$C_nH_mR \qquad (2)$$

(where n = 1 to 6, m = 3 to 13, and R is a functional group composed of any one or more elements selected from the group consisting of C, H, O, S, N and P)

With an organic substance including only a benzene compound, crystal orientation characteristic of the reform layer becomes too high and irreversible capacity is increased. By further performing a similar heat treatment using a nonbenzenoid compound represented by Chemical Formula 2, a reform layer with different crystalline can be attached. One or more layers of nonbenzenoid compound can be stacked on the reform layer made of benzenoid compound. Also, by using a benzenoid compound and a nonbenzenoid compound being mixed in a proper proportion, micro control of the structure becomes possible according to the proportion. Thereby, the most suitable surface electron structure can be easily obtained.

In this method, any heating method can be used provided the concentration of the diffused organic substance is constant. As to the thermal history, the temperature may be increased at a constant rate or may be maintained at a specific temperature for a specific time. It is preferable to carbonize the organic substance by instantly heating the particle itself by induced heating, since treatment efficiency is increased.

It is preferable to use artificial graphite or natural graphite to which a light grinding treatment is applied by powder classification or the like as graphite particles, since defects are hardly generated between the reform portion and the base material, and the surface and the inside of the particle are easy to become a continuum, suppressing the surface activity.

Furthermore, by performing an oxidation treatment before reforming graphite, defects are hardly generated so that the surface and the inside of the particle are also easy to become a continuum, suppressing the surface activity. It is preferable to perform an oxidation treatment by any one or more kinds of methods of an acid treatment, an ozone treatment and air oxidation.

In the first and second methods of preparing graphite described above, any graphite material can be used. Graphite materials include natural graphite produced from an ore and the like, and artificial graphite which can be obtained by applying a heat treatment on an organic substance as a raw material at a high temperature of 2000 °C and more. It is more preferable to use natural graphite which has the capacity closer to the theoretical value.

Natural graphite is preferable to include a rhombohedral structure in a bulk structure in view of further decrease in the initial irreversible capacity. By milling graphite under a proper condition, a rhombohedral structure appears in the crystalline structure. The content of the rhombohedral structure can be obtained by X-ray diffraction. The content is preferable to lie within the range of 1 % to 40 %, both inclusive, and more preferable within the range of 5 % to 30 %, both inclusive.

Also, a treatment may be readily applied to a graphite material so as to include crystal edges which can be seen in particles of an ordinary flake shape. The reason is that, in a state where the crystal edges are exposed, a limitless number of flaked protrusions on the surface of the particles prevent the particles from being filled by means of tapping. A preferable method of inclusion is a treatment in which the flakes are folded by applying some force. Specifically, an impact may be applied by means of air blow or two pieces of metal plates sandwiching a graphite material in between may be rubbed against each other for causing friction on the graphite. Tapping density before saturation (unsaturated tapping density) can be used as a target of inclusion, and a relatively small number of times tapping is performed makes the judgement easy. Therefore, it is preferable to define the unsaturated tapping density in tapping 20 times to be 1.0 $g/cm^3$ and more as a target of inclusion.

By further pressing the graphite of which the crystal edges are included with the unsaturated tapping density being 0.9 $g/cm^3$ and more, more excellent graphite can be obtained. The reason is that, by pressing, the inside portion with the lower strength is destroyed in advance and the particle with the higher strength which have borne the pressure remains after the treatment. Thereby, the strength of graphite obtained at last is improved. At this time, it is preferable to set an upper limit of the pressure to a degree where the shape of particle can be changed, e.g., to an extent the particle is crashed to one fifth in diameter. Specifically, the pressure is preferable to lie within the range of 1 MPa to 200 MPa, both inclusive, and more preferable to lie within the range of 10 MPa to 100 MPa, both inclusive.

Furthermore, a heat treatment is applied at a temperature within the range of 200 °C to 2300 °C, both inclusive, when at least either one of pitch and the organic substance described in the first and second methods of preparing the graphite is used for coating the surface of natural graphite with the unsaturated tapping density being 0.9 $g/cm^3$ and more before or after pressing. By using the graphite material thus obtained for the negative electrode, the irreversible capacity can be more effectively decreased. The reason is that a solvent with a low boiling point being contained in the pitch or the like cannot be sufficiently volatilized at 200 °C and below, and the coated portion becomes so crystallized at 2300 °C and more that the quality of the surface become the same as that of the inside of the graphite.

Coating of the surface in this case may be performed using the following pitch or organic substances. Examples of the preferred pitch are tar which can be obtained by high-temperature cracking of, for example, coal tar, ethylene tar or crude oil, and substances obtained from asphalt or the like by performing distillation (vacuum distillation, atmospheric distillation, steam distillation), thermal polycondensation, extraction, chemical polycondensation and the like, and pitch formed at the time of dry distillation of wood. Examples of the starting material for the pitch are polyvinyl chloride resin, polyvinyl acetate, polyvinyl butylate and 3,5-dimethyl-phenol resin. Also, the above-mentioned materials with which free carbon, quinoline insoluble matter or carbon black is mixed can be used.

Examples of organic substances which can be used are condensed polycyclic hydrocarbon compounds such as benzene, naphthalene, phenanthrene, anthracene, triphenylene, pyrene, perylene, pentaphene, pentacene, and their derivatives (e.g., their carboxylic acid, carboxylic anhydride, carboxylic imide), mixtures, condensed heterocyclic compounds such as acenaphtylene, indole, isoindole, quinoline, isoquinoline, quinoxaline, phthalazine, carbazole, acridine, phenazine, phenanthridine, and their derivatives, and coupling materials such as silane ($Si_n H_{2n+2}$), titanium (Ti), aluminum (Al), and organic substances containing phosphorus (P), nitrogen (N), boron (B), sulfur (S) or the like.

The typical organic materials for the starting material at the time of forming artificial graphite are coal and pitch.

Examples of pitch are tar which can be obtained by high-temperature cracking of, for example, coal tar, ethylene tar or crude oil, and substances obtained from asphalt or the like by performing distillation (vacuum distillation, atmospheric distillation, steam distillation), thermal polycondensation, extraction, chemical polycondensation and the like, and pitch formed at the time of dry distillation of wood. Examples of the starting material for the pitch are polyvinyl chloride resin, polyvinyl acetate, polyvinyl butylate and 3, 5-dimethyl-phenol resin.

During carbonization, coal and pitch exist in a liquid state to a temperature of about 400 °C, and maintaining the temperature makes the aromatic rings condensed and polycycled for laminated orientation. At about 500 °C and more, semi-coke, which is a precursor of solid carbon is formed. This process is called a liquid phase carbonization process and is a typical formation process of graphitizing carbon.

Examples of other starting materials which can be used are condensed polycyclic hydrocarbon compounds such as naphthalene, phenanthrene, anthracene, triphenylene, pyrene, perylene, pentaphene, pentacene, and their derivatives (e.g., their carboxylic acid, carboxylic anhydride, carboxylic imide), mixtures, condensed heterocyclic compounds such as acenaphtylene, indole, isoindole, quinoline, isoquinoline, quinoxaline, phthalazine, carbazole, acridine, phenazine, phenanthridine, and their derivatives.

A desired artificial graphite using the above-mentioned organic materials as the starting material can be obtained in the following manner. For example, the organic materials are carbonized at a temperature within the range of 300 to 700 °C in an inert gas flow such as nitrogen and then are calcined in an inert gas flow under the following condition; the rate of increasing temperature is 1 to 100 °C per minute, the target temperature is in the range of 900 to 1500 °C, and the time of maintaining the target temperature is about 0 to 30 hours. Then, a heat treatment is applied to the material at 2000 °C and more, preferably at 2500 °C and more. Needless to say, carbonization and calcination may be omitted depending on the case.

The graphite material to which a heat treatment is applied at high temperature is made to be the material for a negative electrode by being grinded and classified. The grinding is preferable to be performed before carbonization, calcination, and a heat treatment at a high temperature.

(Method of manufacturing a battery)

A graphite material according to each of the above-mentioned embodiments can be obtained by the method described above. A non-aqueous electrolyte secondary battery shown in Fig. 1 can be manufactured using the graphite material for a negative electrode.

A negative electrode 22 is formed containing the above-mentioned graphite material. In contrast, a positive electrode 21 is formed containing a positive electrode active material, a conductive agent such as graphite and a binder such as polyvinylidene fluoride. The positive electrode active material is not specifically limited, however, it is preferable to contain a sufficient amount of lithium (Li). Examples of preferable positive electrode active materials are a composite metal oxide made of lithium and a transition metal expressed by $LiM_xO_y$ (where M denotes at least one element selected from the group consisting of Co, Ni, Mn, Fe, Cr, Al and Ti), and an intercalation compound containing Li.

A separator 23 separates the positive electrode 21 and the negative electrode 22 and passes lithium ion while preventing short circuit caused by contact of both electrodes. The separator 23 is formed of, for example, a porous film made of a polyolefin-based material such as polypropylen or polyethylene, or a porous film made of an inorganic material such as ceramic nonwoven cloth. The separator 23 may have a structure in which two or more kinds of porous films are stacked.

As an electrolytic solution, any electrolytic solution (electrolyte) such as a non-aqueous electrolytic solution in which electrolytic salt is dissolved in a non-aqueous solvent, gel electrolyte in which a non-aqueous solvent and electrolytic salt are impregnated in polymer matrix, and an inorganic/organic solid electrolyte can be properly selected and used.

As a non-aqueous solvent for dissolving the electrolyte, a solvent with relatively high permittivity such as EC is used as a main solvent and a solvent with low viscosity containing a plurality of components is preferable to be further added. A compound having a structure in which hydrogen atoms of EC are replaced with halogen elements is also properly used as the main solvent other than EC.

Examples of preferable solvents with high permittivity are PC, butylene carbonate, vinylene carbonate, sulfolane, butyrolactone, and valerolactone. Examples of preferable solvents with low viscosity include symmetrical or asymmetrical chain ester carbonate such as diethyl carbonate, dimethyl carbonate, methyl ethyl carbonate, methyl propyl carbonate. Also, an excellent result can be obtained by using two or more kinds of the solvents with low viscosity.

An excellent characteristic of the solvent can be obtained by replacing part of a compound or the like having a structure in which, EC which is a main solvent of, for example, PC reactive to a graphite material, or hydrogen atoms of EC is/are replaced with halogen elements, with a very small quantity of a second component of solvent. As the second component of solvent, PC, butylene carbonate, 1,2-dimethoxyethane, 1,2-diethoxymethane, γ-butyrolactone, valerolactone, tetrahydrofuran, 2-methyl tetrahydrofuran, 1,3-dioxolane, 4-methyl-1,3-dioxolane, sulfolane, methyl sulfolane can be used. The adding quantity is preferable to be less than 10 percentage by weight.

Furthermore, a third solvent may be added to the main solvent or the mixture of the main solvent and the second component solvent, thereby achieving improvement in the conductivity, prevention of degradation of EC, improvement in the low temperature characteristic while suppressing the reactive characteristic to lithium metal and enhancing safety.

Preferable examples of the third solvent are chain ester carbonate such as DEC (diethyl carbonate), DMC (dimethyl carbonate). Also, asymmetrical chain ester carbonate such as MEC (methyl ethyl carbonate) and MPC (methyl propyl carbonate) is preferable. The mixing ratio (capacity ratio) of the chain ester carbonate as the third solvent to the main solvent or the mixture of the main solvent and the second solvent (the main solvent or the mixture of the main solvent and the second solvent : the third solvent) is preferable to lie within the range of 15 : 85 to 40 : 60 and more preferable within the range of 18 : 82 to 35 : 65.

The third solvent may be a mixture of MEC and DMC. The mixing ratio of MEC to DMC is preferable to be in the range expressed by $1/9 \leq d/m \leq 8/2$, where m denotes the capacity of MEC and d denotes the capacity of DMC. Also, the mixing ratio of the MEC/DMC mixture as the third solvent to the main solvent or the mixture of the main solvent and the second solvent is preferable to be in the range expressed by $3/10 \leq (m+d) / T \leq 9/10$, and is more preferable to be in the range of $5 / 10 \leq (m+d) /T \leq 8/10$ where m denotes the capacity of MEC, and d denotes the capacity of DMC, and T denotes the total amount of the solvent.

As an electrolyte dissolved in such non-aqueous solvent, one or more kinds of solvents which are applicable to this kind of batteries are mixed and used. For example, $LiPF_6$ is preferable. Also, $LiClO_4$, $LiAsF_6$, $LiBF_4$, $LiB(C_6H_5)_4$, $CH_3SO_3Li$, $CF_3SO_3Li$, $LiN(CF_3SO_2)_2$, $LiC(CF_3SO_2)_3$, LiCl, LiBr and the like can be used.

A secondary battery shown in Fig. 1 can be manufactured in the following manner using the above-mentioned materials.

First, a positive electrode 21 is formed in the following manner. A positive electrode mixture is prepared by mixing, for example, a positive electrode active material such as lithium composite oxide, a conducting agent such as graphite and a binder such as polyvinylidene fluoride. The positive electrode mixture is dispersed in a solvent of N-methylpyrrolidone or the like to thereby obtain the positive electrode mixture slurry in the form of paste. The positive electrode mixture slurry is applied to both sides of a positive electrode collector made of a metal foil and dried. Then, compression molding is performed by a roller press or the like.

Then, a negative electrode 22 is formed in the following manner. A negative electrode mixture is prepared by mixing, for example, a carbon-based material according to an embodiment to be described later and a binder such as a polyvinylidene fluoride. The negative electrode mixture is dispersed in a solvent of N-methylpyrrolidone or the like to thereby obtain the positive electrode mixture slurry in the form of paste. The positive electrode mixture slurry is applied to both sides of a positive electrode collector made of a metal foil and dried. Then, compression molding is performed by a roller press or the like.

Subsequently, a positive electrode lead 25 is attached to the positive electrode by welding or the like while a negative electrode lead 26 is attached to the negative electrode by welding or the like. Then, the positive electrode 21 and the negative electrode 22 are rolled with the separator 23 interposed therebetween. The tip of the negative electrode lead 26 is welded to the battery can 11 while the tip of the positive electrode lead 25 is welded to the safety valve mechanism 15. The positive electrode 21 and the negative electrode 22 rolled together are sandwiched by a pair of insulating plates 12 and 13 and are enclosed inside the battery can 11. After enclosing the positive electrode 21 and the negative electrode 22 inside the battery can 11, an electrolyte solution is inserted inside the battery can 11. The battery cover 14, the safety valve mechanism 15 and the PTC device 16 are fixed to the open end of the battery can 11 by caulking together with gasket 17 in between.

[Examples]

Specific examples of the invention will be described in detail.

(Example 1)

First, a negative electrode was formed in the following manner. After adding and mixing petroleum pitch coke with coal tar pitch, pressing was performed at 150 °C. After applying a heat treatment at 300°C in an inert atmosphere, the temperature was further increased to 700 °C. Then, the material was ground and classified, and a heat treatment was applied thereon at 1000 °C in an inert atmosphere. Thereby, a graphite precursor was obtained. Graphite powder was obtained by applying a heat treatment on the precursor at 3000 °C for an hour in an inert atmosphere. Then, sample powder was obtained in the following manner: increasing the temperature of the graphite powder to 1000 °C in nitrogen; mixing volatilized xylene and butene with the 1 : 1 mixing ratio and diffusing them in argon gas with the ratio of 0.02 : 1 (mixture of xylene and butene : argon gas); circulating them to the graphite powder for three hours at a rate of 200 cc per minute; and then decreasing the temperature.

A negative electrode mixture was prepared by mixing 90 parts by weight of the powder carbon material obtained as described and 10 parts by weight of polyvinylidene fluoride (PVDF) as a binder. The negative electrode mixture was dispersed in N-methylpyrrolidone as a solvent to thereby obtain a negative electrode mixture slurry (paste). Then, the negative electrode mixture slurry was applied to both sides of a negative electrode collector made of copper in a band shape having a thickness of 10 μm and then dried. A negative electrode in a band shape was thereby formed by performing compression molding.

Subsequently, a positive electrode was formed in the following manner. $LiCoO_2$ was obtained by mixing 0.5 mole of lithium carbonate and 1.0 mole of cobalt carbonate and calcining it at 900 °C for five hours in an air atmosphere. A positive electrode mixture was prepared by mixing 91 parts by weight of $LiCoO_2$ as a positive electrode active material, 6 parts by weight of graphite as a conductive agent and 3 parts by weight of polyvinylidene fluoride as a binder. The positive electrode mixture was dispersed in N-methylpyrrolidone to thereby obtain slurry (paste). Then, the positive electrode mixture slurry was applied uniformly to both sides of a positive electrode collector made of aluminum in a band shape having a thickness of 20 μm and then dried. A positive electrode in a band shape was thereby formed by performing compression molding.

The band-shaped negative electrode, the band-shaped positive electrode and a separator made of a microporous polypropylene film with a thickness of 25 μm were stacked in the following order; the negative electrode, the separator, the positive electrode, and then the separator. The stacked body was rolled a number of times and the end of the separator in outermost periphery was fixed with an adhesive tape. Thereby, a rolled electrode body was fabricated. The rolled electrode body fabricated as described was, as shown in Fig. 1, enclosed in an iron-made battery can having a diameter of 18 mm and a height of 65 mm to which nickel plating was applied (inner diameter was 17.38 mm, thickness of the can was 0.31 mm). Insulating plates were provided on both sides of the rolled electrode body. Then, a positive electrode lead made of aluminum was lead out of the positive electrode collector and was welded to a battery cover while a negative electrode lead made of nickel was lead out of the negative electrode collector and was welded to the battery can. An electrolyte solution in which $LiPF_6$ was dissolved by a proportion of 1 mol / 1 in a mixed solvent of propylene carbonate, ethylene carbonate, dimethyl carbonate (the volume ratio was 1 : 2 : 2) was inserted inside the battery can. The battery cover was fixed by caulking together with a gasket for insulation with the surface being covered with asphalt in between, maintaining airtight characteristic inside the battery. Thereby, a cylindrical non-aqueous electrolyte secondary battery was obtained.

(Examples 2 to 6)

The graphite powder and the secondary battery were produced in the same manner as in Example 1 except that, at the time of preparing the graphite powder, xylene and butene were diffused at the mixing ratio of 1 : 9, 3 : 7, 6 : 4, 8 : 2, and 9 : 1, respectively.

(Examples 7 to 10)

The graphite powder and the secondary battery were produced in the same manner as in Example 1 except that, at the time of preparing the graphite powder, xylene and butene were circulated to the graphite powder at the rate of 100 cc per minute for half an hour, one hour, five hours, eight hours, respectively.

(Example 11)

The graphite powder and the secondary battery were produced in the same manner as in Example 1 except that, after oxidizing the graphite powder at 500 °C for five hours in an air atmosphere, the temperature was increased, and xylene and butene were circulated to the graphite powder for three hours at the rate of 100 cc per minute.

(Example 12)

The graphite powder and the secondary battery were produced in the same manner as in Example 1 except that, after impact-grinding the graphite powder by a jet mill, the temperature was increased, and xylene and butene were circulated to the graphite powder for three hours at a rate of 100 cc per minute.

As Comparative Example 1 corresponding to Examples 1 to 12, graphite powder was prepared in the following manner. After adding and mixing petroleum pitch coke with coal tar pitch, pressing was performed at 150 °C. After applying a heat treatment at 300 °C in an inert atmosphere, the temperature was further increased to 700 °C. Then, the material was ground and classified, and a heat treatment was applied thereon at 1000 °C in an inert atmosphere. Thereby, a graphite precursor was obtained. Graphite powder was obtained by applying a heat treatment on the precursor at 3000 °C for an hour in an inert atmosphere. A secondary battery was produced using the graphite powder in the same

manner as in Examples 1 to 12.

(Example 13)

A purified Chinese natural graphite with 99.9 % and more purity was ground and was put through an air classifier a plurality of times until the saturated tapping density became 1.0 g / $cm^3$. Then, sample graphite powder was obtained in the following manner: increasing the temperature of the graphite powder to 1000 °C in nitrogen; mixing volatilized xylene and butene with the 1 : 1 mixing ratio and diffusing them in argon gas with the ratio of 0.02 : 1 (mixture of xylene and butene : argon gas); circulating them to the graphite powder for three hours at a rate of 200 cc per minute; and then decreasing the temperature. A secondary battery was produced in the same manner as in Example 1 except that the sample powder thus obtained was used for the negative electrode.

(Examples 14 to 18)

The graphite powder and the secondary battery were produced in the same manner as in Example 13 except that the mixing ratio of xylene to butene was set to be 1 : 9, 3 : 7, 6 : 4, 8 : 2, and 9 : 1, respectively.

(Example 19)

The graphite powder and the secondary battery were produced in the same manner as in Example 13 except that, after oxidizing the graphite powder at 600 °C for five hours in an air atmosphere, the temperature was increased, and xylene and butene were circulated to the graphite powder for three hours at the rate of 100 cc per minute.

As Comparative Example 2 corresponding to Examples 13 to 19, graphite powder was prepared in the following manner. After oxidizing the natural graphite powder at 600 °C for five hours in an air atmosphere, the temperature was increased to 1000 °C in nitrogen. Then, volatilized xylene and butene were mixed in the 1 : 1 mixing ratio and was circulated to the graphite powder for three hours at a rate of 100 cc per minute. The temperature was then decreased and the sample graphite powder was obtained. A secondary battery was produced using the graphite powder in the same manner as in Examples 13 to 19.

(Example 20)

After forming mesocarbon microbeads by heating, at 400 °C, pitch as a starting material obtained by applying a heat treatment to acenaphtylene, the mesocarbon microbeads were cleaned and filtered with xylene. The temperature was increased to 700 °C in an inert atmosphere. Then, the material was ground and classified, and a heat treatment was applied thereon at 1000 °C in an inert atmosphere. Thereby, a graphite precursor was obtained. Graphite powder was obtained by applying a heat treatment on the precursor at 3000 °C for an hour in an inert atmosphere. Then, sample graphite powder was obtained in the following manner: increasing the temperature of the graphite powder to 1000 °C in nitrogen; mixing volatilized xylene and butene in the 1 : 1 mixing ratio and diffusing them in argon gas with the ratio of 0.02 : 1 (mixture of xylene and butene : argon gas); circulating them to the graphite powder for three hours at a rate of 200 cc per minute; and then decreasing the temperature. The secondary battery was produced in the same manner as in Example 1 except that the sample graphite powder thus obtained was used for the negative electrode.

(Examples 21 to 31)

Graphite powder and the secondary battery were produced in the same manner as in Example 20 except that the following organic substances were used to be volatilized and mixed with argon gas.

In Examples 21 to 23, the mixing ratio of xylene and butene was 3 : 7, 6 : 4, and 8 : 2, respectively. In Example 24, a mixture of xylene and ethylene with the mixing ratio of 1 : 1 was used. In Example 25, a mixture of benzene and butene with the mixing ratio of 8 : 2 was used. Ethylene was used in Example 26 and benzene was used in Example 27.

In Examples 28 to 31, a mixture of xylene, butene, and a third organic substance being mixed in the mixing ratio (mole ratio) of 1 : 1 : 1 was used. The third organic substances used were anisole, trimethyl phosphate, acetonitrile and thiophene, respectively.

As Comparative Example 3 corresponding to Examples 20 to 31, graphite powder was fabricated in the following manner. After forming mesocarbon microbeads by heating, at 400 °C, pitch as a starting material obtained by applying a heat treatment to acenaphtylene, the mesocarbon microbeads were cleaned and filtered with xylene. The temperature was increased to 700 °C in an inert atmosphere. Then, the material was ground and classified, and a heat treatment was applied thereon at 1000 °C in an inert atmosphere. Thereby, a graphite precursor was obtained. Graphite powder was obtained by applying a heat treatment on the precursor at 3000 °C for an hour in an inert atmosphere. A secondary

battery was obtained using the graphite powder in the same manner as in Examples 20 to 31.

(Example 32)

After adding and mixing petroleum pitch coke with coal tar pitch, pressing was performed at 150 °C. After applying a heat treatment at 300 °C in an inert atmosphere, the temperature was further increased to 700 °C. Then, the material was ground and classified, and a heat treatment was applied thereon at 1000 °C in an inert atmosphere. Thereby, a graphite precursor was obtained. Graphite powder was obtained by applying a heat treatment on the precursor at 3000 °C for an hour in an inert atmosphere. Then, petroleum pitch with a quinoline insoluble matter content of 5 % was dissolved in toluene, and graphite powder with a quantity ten times as much as the quantity of the pitch was added thereto and sufficiently mixed. Then, the material was dried by spray-drying in an inert atmosphere. The temperature was increased to 1000 °C by applying heat in nitrogen and then was decreased to thereby obtain sample graphite powder. The secondary battery was produced in the same manner as in Example 1 except that the graphite powder was used for the negative electrode.

(Examples 33 to 36)

The graphite powder and the secondary battery were produced in the same manner as in Example 32 except that petroleum pitch used therein had a quinoline insoluble matter content of 2 %, 3 %, 9 %, and 15 %, respectively.

(Examples 37 to 39)

The graphite powder and the secondary battery were produced in the same manner as in Example 32 except that toluene solution with a 15 % polyfurfuryl alcohol content was used and then spray-dried after applying a heat treatment at 700 °C, 1000 °C, and 3000 °C, respectively; the polyfurfuryl alcohol was obtained by polymerizing furfuryl alcohol with acid catalyst.

(Example 40)

The graphite powder and the secondary battery were produced in the same manner as in Example 32 except that the graphite powder added to the pitch was spray-dried and then the temperature was increased to 1000 °C in nitrogen after applying a heat treatment at 250 °C for seven hours in an air atmosphere.

(Example 41)

Petroleum pitch with a quinoline insoluble matter content of 5 % was dissolved in toluene and 1 % of carbon black (Ketjenblack EC) was added therein. Then, graphite powder was added and sufficiently mixed. The graphite powder added to the pitch was spray-dried and then the temperature was increased to 1000 °C in nitrogen after applying a heat treatment at 250 °C in an air atmosphere for five hours. Except for this, the graphite powder and the secondary battery was produced in the same manner as in Example 32.

(Example 42)

After forming mesocarbon microbeads by heating, at 400 °C, pitch as a starting material obtained by applying a heat treatment to acenaphtylene, the mesocarbon microbeads were cleaned and filtered with toluene. The temperature was increased to 700 °C in an inert atmosphere. Then, the material was ground and classified, and a heat treatment was applied thereon at 1000 °C in an inert atmosphere. Thereby, a graphite precursor was obtained. Graphite powder was obtained by applying a heat treatment on the precursor at 3000 °C for an hour in an inert atmosphere. Then, petroleum pitch with a quinoline insoluble matter content of 5 % was dissolved in toluene, and graphite powder with a quantity ten times as much as the quantity of the pitch was added thereto and sufficiently mixed. Then, the material was dried by spray-drying in an inert atmosphere. The temperature was increased to 1000 °C by applying heat in nitrogen and then was decreased to thereby obtain sample graphite powder. The secondary battery was produced in the same manner as in Example 1 except that the sample graphite powder was used for the negative electrode.

(Examples 43 to 46)

The graphite powder and the secondary battery were produced in the same manner as in Example 32 except that petroleum pitch used therein had a quinoline insoluble matter content of 2%, 3%, 9 %, and 15 %, respectively.

(Examples 47 to 49)

As a solvent of petroleum pitch with a quinoline insoluble matter content of 5 %, toluene solution with a 9 % polyfurfuryl alcohol content was used; the polyfurfuryl alcohol was obtained by polymerizing furfuryl alcohol with acid catalyst. After adding the graphite powder therein, the material was spray-dried after applying a heat treatment at 700 °C, 1000 °C, and 3000 °C, respectively. Except for this, the graphite powder and the secondary battery were produced in the same manner as in Example 42. In Example 49, however, a heat treatment was again performed at 3000 °C after spray-drying.

(Example 50)

A purified Chinese natural graphite was ground and was put through an air classifier a plurality of times until the tapping density in tapping 20 times became 1.02 g/$cm^3$ and the saturated tapping density became 1.1 g/$cm^3$. Then, petroleum pitch with a quinoline insoluble matter content of 5 % was dissolved in toluene, and graphite powder with a quantity ten times as much as the quantity of the pitch was added thereto and sufficiently mixed. Then, the material was dried by spray-drying in an inert atmosphere. The temperature was increased to 1000 °C by applying heat in nitrogen and then was decreased to thereby obtain sample graphite powder. The secondary battery was produced in the same manner as in Example 1 except that the sample graphite powder was used for the negative electrode.

(Examples 51 to 54)

The graphite powder and the secondary battery were produced in the same manner as in Example 50 except that petroleum pitch used therein had a quinoline insoluble matter content of 2 %, 3 %, 9 %, and 15 %, respectively.

(Example 55)

The graphite powder and the secondary battery were produced in the same manner as in Example 50 except that the graphite powder was spray-dried in an air atmosphere.

(Example 56)

The graphite powder and the secondary battery were produced in the same manner as in Example 50 except that natural graphite with the tapping density of 0.93 g/$cm^3$ in tapping 40 times was used as a starting material.

(Example 57)

The graphite powder and the secondary battery were produced in the same manner as in Example 50 except that natural graphite with the tapping density of 1.1 g/$cm^3$ in tapping 40 times was used as a starting material.

(Example 58)

The graphite powder and the secondary battery were produced in the same manner as in Example 50 except that natural graphite which was pressed with a pressure of 80 MPa after being ground and classified was used as a starting material.

(Example 59)

The graphite powder and the secondary battery were produced in the same manner as in Example 50 except that natural graphite with a 30 % rhombohedral structure content which can be obtained by a powder X-ray diffractometry was used as a starting material.

Spectrum analysis by surface enhanced Raman spectroscopy and TG analysis were performed on each of the sample graphite powders prepared as described to obtain $G_s$, the number of peaks on the DTG curve, starting temperature of weight reduction and a reform rate. Furthermore, the tapping density in tapping 40 times, the number of times tapping was performed until saturation, packing characteristic index, the ratio of specific surface area before and after pressing, and interlayer spacing distance d (002) crystal planes were measured. Then, batteries using these materials for the negative electrodes were fabricated. Subsequently, the batteries were charged under a condition at a maximum voltage of 4.2 V, a fixed current of 1 A and charging time of three hours and then were discharged to a fixed current of 0.7 A and 2.5 V The battery capacity, the charging/discharging efficiency were measured. Also, the cycle retention rate which

was obtained by dividing the capacity of the batteries after repeating charging/discharging for 200 cycles under the above-mentioned condition by the initial capacity was measured.

The results of the above-mentioned measurement were shown in Tables 1 to 6 by each method of preparing graphite powder. Also, the correlation of $G_S$ and the initial efficiency was shown in Fig. 2, the correlation of the saturated tapping density and the capacity of the batteries were shown in Fig. 3, and the correlation of the ratio of specific surface area before/after pressing and the cycle retention rate were shown in Fig. 4. From Tables and Figures, it is clear that a secondary battery with more excellent capacity and a reversible cycle characteristic can be obtained in Examples than those of Comparative Examples.

Table 1

| | Gs | number of peaks on DTG | proportion of weight reduction on DTG (wt%) | 40-time tapping density (g/cc) | saturated tapping density (g/cc) | packing charac-teristic index | specific surface area ($m^2/g$) | ratio of specific surface area after pressing | 002 plane interlayer spacing (nm) | starting temper-ature of weight reduction (°C) | reform rate (%) | dis-charging capacity (mAh/g) | charging/dis-charging efficiency (%) | battery capacity (mAh) | cycle retention rate (%) |
|---|---|---|---|---|---|---|---|---|---|---|---|---|---|---|---|
| Example 1 | 2.1 | 2 | 18 | 1.0 | 1.2 | 0.54 | 1.5 | 1.9 | 0.3363 | 573 | 12.0 | 340 | 92 | 1762 | 88 |
| Example 2 | 1.8 | 2 | 17 | 1.0 | 1.3 | 0.59 | 2.3 | 1.9 | 0.3363 | 600 | 7.4 | 341 | 90 | 1814 | 88 |
| Example 3 | 1.9 | 2 | 15 | 1.0 | 1.3 | 0.59 | 1.9 | 1.9 | 0.3363 | 585 | 7.9 | 340 | 91 | 1821 | 88 |
| Example 4 | 2.2 | 2 | 13 | 1.0 | 1.3 | 0.59 | 1.7 | 2.0 | 0.3363 | 549 | 7.6 | 342 | 92 | 1829 | 87 |
| Example 5 | 2.3 | 2 | 13 | 0.9 | 1.2 | 0.54 | 1.6 | 2.2 | 0.3363 | 522 | 8.1 | 340 | 91 | 1754 | 85 |
| Example 6 | 2.5 | 2 | 12 | 0.9 | 1.1 | 0.50 | 1.5 | 2.4 | 0.3363 | 510 | 8.0 | 340 | 89 | 1672 | 84 |
| Example 7 | 8.1 | 2 | 6 | 0.8 | 0.9 | 0.41 | 3.1 | 3.0 | 0.3363 | 620 | 1.9 | 341 | 87 | 1523 | 81 |
| Example 8 | 4.5 | 2 | 11 | 0.9 | 1.0 | 0.45 | 2.8 | 2.5 | 0.3363 | 602 | 3.9 | 340 | 89 | 1605 | 83 |
| Example 9 | 2.7 | 2 | 21 | 1.0 | 1.3 | 0.59 | 1.2 | 1.7 | 0.3363 | 568 | 17.5 | 340 | 93 | 1836 | 88 |
| Example 10 | 2.8 | 2 | 33 | 1.0 | 1.2 | 0.54 | 0.9 | 1.5 | 0.3363 | 564 | 36.7 | 340 | 93 | 1769 | 89 |
| Example 11 | 1.8 | 2 | 17 | 1.2 | 1.2 | 0.54 | 1.7 | 1.3 | 0.3363 | 561 | 10.0 | 342 | 93 | 1769 | 91 |
| Example 12 | 2.0 | 2 | 16 | 0.9 | 1.3 | 0.59 | 1.2 | 2.5 | 0.3363 | 574 | 13.3 | 341 | 93 | 1836 | 83 |
| Comparative Example 1 | 12.5 | 1 | 0 | 0.8 | 0.9 | 0.41 | 3.3 | 3.1 | 0.3363 | 672 | 0.0 | 339 | 85 | 1508 | 81 |

Table 2

| | Gs | number of peaks on DTG | proportion of weight reduction on DTG (wt%) | 40-time tapping density (g/cc) | saturated tapping density (g/cc) | packing charac-teristic index | specific surface area ($m^2/g$) | ratio of specific surface area after pressing | 002 plane interlayer spacing (nm) | starting temper-ature of weight reduction (°C) | reform rate (%) | dis-charging capacity (mAh/g) | charging/dis-charging efficiency (%) | battery capacity (mAh) | cycle retention rate (%) |
|---|---|---|---|---|---|---|---|---|---|---|---|---|---|---|---|
| Example 13 | 2.2 | 2 | 17 | 0.8 | 1.2 | 0.54 | 1.5 | 2.4 | 0.3357 | 582 | 11.3 | 352 | 90 | 1911 | 84 |
| Example 14 | 1.8 | 2 | 18 | 0.9 | 1.1 | 0.49 | 2.3 | 2.2 | 0.3357 | 513 | 7.8 | 351 | 88 | 1828 | 85 |
| Example 15 | 2.0 | 2 | 16 | 0.9 | 1.1 | 0.49 | 1.9 | 2.3 | 0.3357 | 530 | 8.4 | 352 | 89 | 1836 | 85 |
| Example 16 | 2.3 | 2 | 13 | 0.8 | 1.2 | 0.54 | 1.7 | 2.5 | 0.3357 | 546 | 7.6 | 353 | 91 | 1919 | 83 |
| Example 17 | 2.3 | 2 | 14 | 0.7 | 1.1 | 0.49 | 1.6 | 2.6 | 0.3357 | 573 | 8.8 | 353 | 90 | 1843 | 82 |
| Example 18 | 2.4 | 2 | 13 | 0.7 | 1.1 | 0.49 | 1.5 | 2.7 | 0.3357 | 599 | 8.7 | 352 | 89 | 1836 | 81 |
| Example 19 | 2.5 | 2 | 13 | 0.8 | 1.1 | 0.51 | 1.4 | 2.5 | 0.3357 | 585 | 8.6 | 352 | 90 | 1863 | 84 |
| Comparative Example 2 | 7.0 | 1 | 0 | 0.6 | 0.8 | 0.36 | 2.8 | 3.3 | 0.3357 | 706 | 0.0 | 351 | 79 | 1554 | 77 |

Table 3

| | Gs | number of peaks on DTG | proportion of weight reduction on DTG (wt%) | 40-time tapping density (g/cc) | saturated tapping density (g/cc) | packing charac-teristic index | specific surface area ($m^2/g$) | ratio of specific surface area after pressing | 002 plane interlayer spacing (nm) | starting temper-ature of weight reduction (°C) | reform rate (%) | dis-charging capacity (mAh/g) | charging/ dis-charging efficiency (%) | battery capacity (mAh) | cycle retention rate (%) |
|---|---|---|---|---|---|---|---|---|---|---|---|---|---|---|---|
| Example 20 | 2.3 | 2 | 18 | 1.1 | 1.3 | 0.58 | 0.7 | 1.5 | 0.3359 | 588 | 25.7 | 348 | 93 | 1742 | 89 |
| Example 21 | 1.7 | 2 | 18 | 1.1 | 1.3 | 0.58 | 0.7 | 1.4 | 0.3359 | 506 | 25.7 | 348 | 91 | 1726 | 90 |
| Example 22 | 1.8 | 2 | 16 | 1.2 | 1.3 | 0.58 | 0.7 | 1.3 | 0.3359 | 528 | 22.9 | 349 | 92 | 1734 | 91 |
| Example 23 | 2.1 | 2 | 14 | 1.2 | 1.3 | 0.58 | 0.6 | 1.3 | 0.3359 | 551 | 23.3 | 347 | 93 | 1742 | 91 |
| Example 24 | 2.3 | 2 | 13 | 1.0 | 1.3 | 0.58 | 0.6 | 1.5 | 0.3359 | 580 | 21.7 | 348 | 93 | 1742 | 89 |
| Example 25 | 2.6 | 2 | 12 | 1.2 | 1.3 | 0.58 | 0.6 | 1.3 | 0.3359 | 612 | 20.0 | 348 | 93 | 1742 | 91 |
| Example 26 | 1.4 | 2 | 21 | 1.3 | 1.2 | 0.54 | 0.8 | 1.2 | 0.3359 | 499 | 26.3 | 349 | 92 | 1684 | 93 |
| Example 27 | 3.2 | 2 | 16 | 1.2 | 1.3 | 0.58 | 0.5 | 1.3 | 0.3359 | 632 | 32.0 | 348 | 90 | 1718 | 91 |
| Example 28 | 2.5 | 2 | 17 | 1.1 | 1.3 | 0.58 | 0.7 | 1.5 | 0.3359 | 582 | 24.3 | 347 | 92 | 1734 | 89 |
| Example 29 | 2.3 | 2 | 16 | 1.1 | 1.3 | 0.58 | 0.7 | 1.4 | 0.3359 | 589 | 22.9 | 347 | 93 | 1742 | 90 |
| Example 30 | 2.0 | 2 | 17 | 1.2 | 1.3 | 0.58 | 0.7 | 1.2 | 0.3359 | 577 | 24.3 | 348 | 93 | 1742 | 92 |
| Example 31 | 2.1 | 2 | 16 | 1.1 | 1.3 | 0.58 | 0.8 | 1.3 | 0.3359 | 583 | 20.0 | 349 | 94 | 1750 | 91 |
| Comparative Example 3 | 10.0 | 1 | 0 | 0.9 | 1.2 | 0.54 | 0.9 | 2.1 | 0.3359 | 682 | 0.0 | 347 | 87 | 1593 | 86 |

Table 4

| | Gs | number of peaks on DTG | proportion of weight reduction on DTG (wt%) | 40-time tapping density (g/cc) | saturated tapping density (g/cc) | packing charac-teristic index | specific surface area ($m^2/g$) | ratio of specific surface area after pressing | 002 plane interlayer spacing (nm) | starting temper-ature of weight reduction (°C) | reform rate (%) | dis-charging capacity (mAh/g) | charging/ dis-charging efficiency (%) | battery capacity (mAh) | cycle retention rate (%) |
|---|---|---|---|---|---|---|---|---|---|---|---|---|---|---|---|
| Example 32 | 2.1 | 2 | 12 | 1.0 | 1.1 | 0.50 | 2.1 | 2.0 | 0.3363 | 563 | 5.7 | 340 | 89 | 1672 | 87 |
| Example 33 | 6.6 | 2 | 9 | 1.0 | 1.0 | 0.45 | 2.8 | 2.0 | 0.3363 | 612 | 3.2 | 340 | 88 | 1598 | 87 |
| Example 34 | 1.9 | 2 | 10 | 1.0 | 1.0 | 0.45 | 2.6 | 2.0 | 0.3363 | 585 | 3.8 | 340 | 89 | 1605 | 87 |
| Example 35 | 2.2 | 2 | 15 | 1.0 | 1.2 | 0.54 | 1.8 | 2.0 | 0.3363 | 554 | 8.3 | 340 | 90 | 1747 | 87 |
| Example 36 | 2.3 | 2 | 17 | 1.0 | 1.2 | 0.54 | 1.6 | 1.9 | 0.3363 | 553 | 10.6 | 340 | 91 | 1754 | 88 |
| Example 37 | 1.5 | 2 | 12 | 1.2 | 1.1 | 0.50 | 1.7 | 1.6 | 0.3363 | 488 | 6.0 | 340 | 91 | 1687 | 91 |
| Example 38 | 1.1 | 2 | 12 | 1.1 | 1.2 | 0.50 | 1.5 | 1.7 | 0.3363 | 503 | 6.0 | 340 | 91 | 1754 | 90 |
| Example 39 | 0.7 | 2 | 13 | 1.1 | 1.1 | 0.50 | 1.5 | 1.8 | 0.3363 | 515 | 8.7 | 340 | 92 | 1695 | 90 |
| Example 40 | 1.2 | 2 | 12 | 1.1 | 1.1 | 0.50 | 2 | 1.9 | 0.3363 | 495 | 6.0 | 340 | 90 | 1680 | 89 |
| Example 41 | 2.5 | 2 | 14 | 1.1 | 1.1 | 0.50 | 1.9 | 1.9 | 0.3363 | 535 | 7.4 | 340 | 89 | 1672 | 90 |

Table 5

| | Gs | number of peaks on DTG | proportion of weight reduction on DTG (wt%) | 40-time tapping density (g/cc) | saturated tapping density (g/cc) | packing charac-teristic index | specific surface area ($m^2/g$) | ratio of specific surface area after pressing | 002 plane interlayer spacing (nm) | starting temper-ature of weight reduction (°C) | reform rate (%) | dis-charging capacity (mAh/g) | charging/dis-charging efficiency (%) | battery capacity (mAh) | cycle retention rate (%) |
|---|---|---|---|---|---|---|---|---|---|---|---|---|---|---|---|
| Example 42 | 3.1 | 2 | 13 | 1.1 | 1.2 | 0.54 | 0.6 | 1.4 | 0.3359 | 583 | 21.7 | 348 | 90 | 1675 | 90 |
| Example 43 | 7.8 | 2 | 10 | 1.1 | 1.2 | 0.54 | 0.6 | 1.4 | 0.3359 | 613 | 16.7 | 348 | 89 | 1667 | 90 |
| Example 44 | 4.3 | 2 | 12 | 1.1 | 1.2 | 0.54 | 0.6 | 1.4 | 0.3359 | 586 | 20.0 | 348 | 90 | 1675 | 90 |
| Example 45 | 2.6 | 2 | 16 | 1.0 | 1.2 | 0.54 | 0.6 | 1.4 | 0.3359 | 560 | 26.7 | 348 | 91 | 1683 | 90 |
| Example 46 | 2.3 | 2 | 19 | 1.2 | 1.3 | 0.58 | 0.7 | 1.3 | 0.3359 | 539 | 27.1 | 348 | 92 | 1749 | 91 |
| Example 47 | 1.4 | 2 | 14 | 1.3 | 1.4 | 0.63 | 0.7 | 1.2 | 0.3359 | 498 | 20.0 | 349 | 92 | 1807 | 93 |
| Example 48 | 1.2 | 2 | 15 | 1.3 | 1.3 | 0.58 | 0.7 | 1.2 | 0.3359 | 522 | 21.4 | 349 | 92 | 1749 | 93 |
| Example 49 | 1.0 | 2 | 15 | 1.2 | 1.3 | 0.58 | 0.7 | 1.3 | 0.3359 | 547 | 21.4 | 349 | 92 | 1749 | 92 |

Table 6

| | Gs | number of peaks on DTG | proportion of weight reduction on DTG (wt%) | 40-time tapping density (g/cc) | saturated tapping density (g/cc) | packing charac-teristic index | specific surface area ($m^2/g$) | ratio of specific surface area after pressing | 002 plane interlayer spacing (nm) | starting temper-ature of weight reduction (°C) | reform rate (%) | dis-charging capacity (mAh/g) | charging/dis-charging efficiency (%) | battery capacity (mAh) | cycle retention rate (%) |
|---|---|---|---|---|---|---|---|---|---|---|---|---|---|---|---|
| Example 50 | 2.3 | 2 | 12 | 1.0 | 1.1 | 0.49 | 1.8 | 1.9 | 0.3357 | 569 | 6.7 | 352 | 88 | 1828 | 88 |
| Example 51 | 5.3 | 2 | 9 | 1.0 | 1.0 | 0.45 | 2.1 | 2.0 | 0.3357 | 605 | 4.3 | 352 | 83 | 1721 | 87 |
| Example 52 | 3.2 | 2 | 10 | 1.0 | 1.0 | 0.45 | 1.9 | 2.0 | 0.3357 | 588 | 5.3 | 352 | 86 | 1744 | 87 |
| Example 53 | 2.1 | 2 | 15 | 1.0 | 1.2 | 0.54 | 1.7 | 1.9 | 0.3357 | 558 | 8.8 | 352 | 90 | 1911 | 88 |
| Example 54 | 2.1 | 2 | 17 | 1.1 | 1.2 | 0.54 | 1.6 | 1.8 | 0.3357 | 545 | 10.6 | 351 | 91 | 1919 | 89 |
| Example 55 | 1.8 | 2 | 12 | 1.0 | 1.1 | 0.49 | 1.8 | 1.9 | 0.3357 | 563 | 6.7 | 352 | 90 | 1843 | 88 |
| Example 56 | 2.2 | 2 | 12 | 1.2 | 1.2 | 0.54 | 1.7 | 1.8 | 0.3357 | 568 | 7.1 | 353 | 89 | 1904 | 91 |
| Example 57 | 2.2 | 2 | 12 | 1.3 | 1.3 | 0.58 | 1.6 | 1.7 | 0.3357 | 563 | 7.5 | 353 | 89 | 1972 | 92 |
| Example 58 | 2.2 | 2 | 12 | 1.1 | 1.2 | 0.58 | 1.7 | 1.5 | 0.3357 | 569 | 6.8 | 355 | 91 | 1941 | 91 |
| Example 59 | 2.1 | 2 | 12 | 1.0 | 1.1 | 0.49 | 1.8 | 1.9 | 0.3357 | 568 | 6.7 | 354 | 92 | 1859 | 88 |

The graphite material used in Comparative Example has one peak on the DTG curve indicating that the material has a single crystal structure inside the particle, and has a relatively high value of $G_S$ indicating there is little portion left for a structure other than the main crystal structure inside the particle. Also, as it can be seen from the preparing method, the graphite material in this case has a structure which is composed of almost homogeneous crystal. In other words, the material is not like the graphite used in Examples in which a structure different from that of inside the particle is formed on the surface of the particle. In Examples and Comparative Examples, it is clear that the differences in the characteristics of the secondary batteries are due to structural differences in the graphite particle.

The invention has been described by referring to the embodiments and the examples. However, the invention is not limited to the embodiments and the examples but many modifications are possible. For example, in the above-mentioned embodiments and examples, the electrolyte solution in which lithium salt as an electrolyte is dissolved in a solvent is described. However, the invention is also applicable to other electrolyte solutions in which sodium salt or calcium salt is dissolved.

Furthermore, in the embodiments and the examples, a cylindrical secondary battery having a rolled structure has been described by referring to a specific example. However, the invention is also applicable to a cylindrical secondary batteries having other structures. Also, the invention is applicable to secondary batteries having other shapes such as a coin-type, button-type or angular-type other than the cylindrical type.

As described, in a non-aqueous electrolyte secondary battery of the invention, $G_S$ obtained by the surface enhanced Raman spectrum, as a parameter of the surface electronic structure correlative to the surface activity of the graphite material for the negative electrode, is defined to be 10 and below. Thereby, irreversible capacity generated at

the time of first charging can be remarkable decreased and substantially high capacity can be achieved.

In a non-aqueous electrolyte secondary battery of the invention, the graphite material for the negative electrode is defined to have two peaks on DTG curve obtained by TG analysis as a parameter which defines quantitatively the structural difference inside the particle and the outermost surface. Thereby, irreversible capacity generated at the time of first charging can be remarkably decreased and substantially high capacity can be achieved.

In a non-aqueous electrolyte secondary battery of the invention, the saturated tapping density of the graphite material for the negative electrode is defined to be 1.0 g/$cm^3$ so that a negative electrode with high capacity packing characteristic can be fabricated. Therefore, reversible capacity is maintained or increased in the secondary battery and substantially high capacity can be achieved.

In a non-aqueous electrolyte secondary battery of the invention, the packing characteristic index of the graphite material for the negative electrode is defined to be 0.42 and more so that a negative electrode with high capacity packing characteristic can be fabricated. Therefore, reversible capacity is maintained or increased in the secondary battery and substantially high capacity can be achieved.

In a non-aqueous electrolyte secondary battery of the invention, the specific surface area of the graphite material for the negative electrode after pressing is defined to be 2.5 times and below as much as that before pressing. Therefore, an influence of pressing on a negative electrode at the time of forming the electrode can be decreased and the surface structure can be maintained after being used for manufacturing a negative electrode. As a result, irreversible capacity of the secondary battery is decreased and substantially high capacity can be achieved while suppressing the deterioration in charging/discharging cycle characteristic.

In a method of preparing a carbon-based material for a negative electrode of the invention, a coating material made of one of pitch containing free carbon, pitch with a quinoline insoluble matter content of 2 % and more, or polymer is mixed with a carbon-based material made of at least either one of mesocarbon microbeads grown at a temperature within the range of the formation temperature to 2000 °C, both inclusive, and a carbon material, and then the carbon-based material with which the coating material is mixed is graphitized. Thereby, high crystalline graphite particle covered with an amorphous coating can be formed. Therefore, in the material for the negative electrode prepared by the method, the surface activity can be suppressed and irreversible capacity of the secondary battery can be decreased.

In a method of preparing a carbon-based material for a negative electrode of the invention, a heat treatment is applied in an oxidizing atmosphere to a carbon-based material made of at least either one of mesocarbon microbeads grown at a temperature within the range of the formation temperature to 2000 °C, both inclusive, and then the carbon-based material is graphitized. Thereby, high crystalline graphite particle covered with an amorphous coating can be formed. Therefore, in the material for the negative electrode prepared by the method, the surface activity can be suppressed and irreversible capacity of the secondary battery can be decreased.

In a method of preparing a carbon-based material for a negative electrode of the invention, a heat treatment is applied to graphite particles in an inert atmosphere where more than a specific concentration of an organic substance is diffused. Thereby, high crystalline graphite particle covered with an amorphous coating can be formed. Therefore, in the material for the negative electrode prepared by the method, the surface activity can be suppressed and irreversible capacity of the secondary battery can be decreased.

Obviously many modifications and variations of the present invention are possible in the light of above teachings. It is therefore to be understood that within the scope of the appended claims the invention may be practiced other wise than as specifically described. According to a further possible embodiment, there may be provided a non-aqueous electrolyte secondary battery comprising a positive electrode, a negative electrode and a non-aqueous electrolyte, wherein the negative electrode contains graphite in which $G_s$ denoted by the following formula in the surface enhanced Raman spectrum is 10 and below:

$$G_s = H_{sg} / H_{sd}$$

(where, $H_{sg}$ is the height of a signal having a peak within the range of 1580 $cm^{-1}$ to 1620 $cm^{-1}$, both inclusive, and $H_{sd}$ is the height of a signal having a peak within the range of 1350 $cm^{-1}$> to 1400 $cm^{-1}$, both inclusive).

According to still a further embodiment, there may be provided a non-aqueous electrolyte secondary battery comprising a positive electrode, a negative electrode and a non-aqueous electrolyte, wherein the negative electrode contains graphite having at least two peaks on a defferential thermogravimetric curve obtained by thermogravimetric analysis in an airflow.

In a further embodiment, there may be provided a non-aqueous electrolyte secondary battery comprising a positive electrode, a negative electrode and a non-aqueous electrolyte, wherein the negative electrode contain graphite with a saturated tapping density of 1.0 g /$cm^3$ and more.

In a still further embodiment, there may be provided a non-aqueous electrolyte secondary battery comprising a positive electrode, a negative electrode and a non-aqueous electrolyte, wherein the negative electrode contains graphite with a packing characteristic index of 0.42 and more.

A further embodiment may include a non-aqueous electrolyte secondary battery comprising a positive electrode, a negative electrode and a non-aqueous electrolyte, wherein the negative electrode formed by pressing and contains graphite with a specific surface area after pressing being 2.5 times and below of that before pressing.

The interlayer spacing distance [d(002)] crystal planes parameter of the graphite in the negative electrode may be 0.3363 nm and below.

The starting temperature of weight reduction by oxidation of the graphite in the negative electrode obtained by thermogravimetric analysis in an airflow may be 300 °C and more.

Also, the graphite in the negative electrode may have at least two peaks on the differential thermogravimetric curve obtained by thermogravimetric analysis in an airflow, and the reform rate obtained from the differential thermogravimetric curve may lie within the range of 1 to 38, both inclusive.

The saturated tapping density of the graphite in the negative electrode may be 1.0 g/$cm^3$ and more.

Further, the packing characteristic index of the graphite in the negative electrode may be 0.42 and more.

The negative electrode may be formed by pressing and a specific surface area of the graphite in the negative electrode after pressing may be 2.5 times and below compared to that before pressing.

Moreover, the graphite in the negative electrode may have a rhombohedral structure.

The positive electrode may be formed containing a lithium composite oxide expressed by LiMxOy (where M may denote at least one element selected from the group consisting of Co, Ni, Mn, Fe, Cr, Al and Ti).

Each of the negative electrode and the positive electrode may have a structure in which a mixture containing an active material may be formed on both sides of a band-shaped collector, and the battery may be formed by stacking the negative electrode and the positive electrode with a separator made of a microporous film interposed therebetween, being spirally rolled a number of times.

In a further embodiment, a method of preparing a carbon-based material for a negative electrode may include the steps of:

mixing a coating material made of one of pitch containing free carbon, pitch with a quinoline insoluble matter content of 2 % and more, or polymer with a carbon-based material made of at least either one of mesocarbon microbeads grown at a temperature within the range of the formation temperature to 2000 °C, both inclusive, and a carbon material; and graphitizing the carbon-based material with which the coating material is mixed.

The method of this embodiment may also include a step of applying a heat treatment to the carbon-based material in an oxidizing atmosphere before graphitization.

Further, this method may include a step of performing an oxidation treatment on the carbon-based material by one or more methods of an acid treatment, an ozone treatment or air oxidation before mixing the carbon-based material with the coating material.

Pitch comprising carbon black may be used as the coating material.

Additionally, natural graphite having a rhombohedral structure is may be used as the carbon-based material.

Graphite powder with the tapping density of 1.0 g / $cm^3$ and more in tapping 40 times may be used as the carbon-based material.

Also, natural graphite with the tapping density of 0.9 g/$cm^3$ in tapping 20 times may be used as the carbon-based material and the graphitization may be performed at a temperature within the range of 200 °C to 2300 °C, both inclusive.

Further, natural graphite with the tapping density of 0.9 g/$cm^3$ in tapping 40 times, on which pressing may be performed, may be used as the carbon-based material.

Each of a negative electrode and a positive electrode may have a structure in which a mixture containing an active material may be formed on both sides of a band-shaped collector, and the battery may be formed by stacking the negative electrode and the positive electrode with a separator made of a microporous film interposed therebetween, being spirally rolled a number of times.

The positive electrode may be formed to contain a lithium composite oxide expressed by $LiM_xO_y$ (where M may denote at least one element selected from the group consisting of Co, Ni, Mn, Fe, Cr, A1 and Ti).

In addition, the pressing may be performed with a pressure of 1 MPa and more.

In a further embodiment, a method of preparing a carbon-based material for a negative electrode may include steps of applying a heat treatment in an oxidizing atmosphere on a carbon-based material made of at least either one of mesocarbon microbeads grown at a temperature within the range of the formation temperature to 2000 °C, both inclusive, and a carbon material; and graphitizing the carbon-based material.

In this embodiment, natural graphite having a rhombohedral structure may be used as the carbon-based material.

Also, graphite powder with the tapping density of 1.0 $g/cm^3$ and more in tapping 40 times may be used as the carbon-based material.

Each of a negative electrode and a positive electrode may have a structure in which a mixture containing an active material may be formed on both sides of a band-shaped collector, and the battery may be formed by stacking the negative electrode and the positive electrode with a separator made of a microporous film interposed therebetween, being spirally rolled a number of times.

Moreover, the positive electrode may be formed to contain a lithium composite oxide expressed by LiMxOy (where M may denote at least one element selected from the group consisting of Co, Ni, Mn, Fe, Cr, Al and Ti).

Moreover, according to a possible embodiment, there may be provided a method of preparing a carbon-based material for a negative electrode including steps of mixing a coating material made of one of pitch containing free carbon, pitch with a quinoline insoluble matter content of 2 % and more, or polymer with a carbon-based material made of at least either one of mesocarbon microbeads grown at a temperature within the range of the formation temperature to 2000 °C, both inclusive, and a carbon material, and graphitizing the carbon-based material to which the coating material is mixed,wherein the step of mixing the coating material with the carbon-based material includes a step of applying a heat treatment to graphite particles in an inert atmosphere where more than a specific concentration of an organic substance is diffused.

The method may be used in a manufacturing process of a secondary battery where each of a negative electrode and a positive electrode may have a structure in which a mixture containing an active material may be formed on both sides of band-shaped collector and the battery may be formed by stacking the negative electrode and the positive electrode with a separator made of a microporous film interposed therebetween, being spirally rolled a number of times.

Furthermore, a benzenoid compound having a structure including at least one or more benzene rings may be used as the organic substance.

Additionally, a benzenoid compound having a structure including a bond of oxygen may be used as the organic substance.

Either a nonbenzenoid compound, or a mixture of a nonbenzenoid compound and a benzenoid compound may be contained as the organic substance.

Also, a compound in which a carbon atom (C) may be replaced with another element may be used as the benzenoid compound.

Further, a benzenoid compound having at least one or more structures in which a carbon atom (C) may be replaced with at least one element selected from the group consisting of sulfur (S), nitrogen (N) and phosphorus (P) may be used as the benzenoid compound.

A method of preparing a carbon-based material for a negative electrode may include a step of forming the graphite particles by grinding artificial graphite or natural graphite.

An oxidation treatment may be performed on the graphite particles by one or more methods of an acid treatment, an ozone treatment or air oxidation before the heat treatment.

Moreover, natural graphite having a rhombohedral structure may be used as the graphite particles.

Graphite powder with the tapping density of 1.0 $g/cm^3$ and more in tapping 40 times may be used as the graphite particles.

Still further, natural graphite with the tapping density of 0.9 $g/cm^3$ and more in tapping 20 times may be used as the carbon-based material, and the natural graphite may be mechanically processed and pressing may be performed thereon, and then a heat treatment may be applied at a temperature within the range of 200 °C to 2300 °C, both inclusive.

Also, natural graphite with the tapping density of 0.9 $g/cm^3$ and more in tapping 40 times may be used as the carbon-based material, and the natural graphite may be mechanically processed, and pressing may be performed thereon, and then a heat treatment may be applied at a temperature within the range of 200 °C to 2300 °C, both inclusive.

The pressing may be performed with a pressure of 1MPa and more.

Said method may be used in a manufacturing process of a secondary battery where each of a negative electrode and a positive electrode may have a structure in which a mixture containing an active material may be formed on both sides of band-shaped collector and the battery may be formed by stacking the negative electrode and the positive electrode with a separator made of a microporous film interposed therebetween, being spirally rolled a number of times.

In addition, the positive electrode may be formed to contain a lithium composite oxide expressed by LiMxOy (where M may denote at least one element selected from the group consisting of Co, Ni, Mn, Fe, Cr, A1 and Ti).

According to still a further embodiment, there may be provided a method of preparing a carbon-based material for a negative electrode including steps of mixing a coating material made of one of pitch containing free carbon, pitch with a quinoline insoluble matter content of 2 % and more, or polymer with a carbon-based material made of at least either one of mesocarbon microbeads grown at a temperature within the range of the formation temperature to 2000 °C, both inclusive, and a carbon material, and graphitizing the carbon-based material with which the coating material is mixed, wherein natural graphite with the tapping density of 0.9 $g/cm^3$ and more in tapping 20 times is used as the carbon-based material, and the natural graphite is mechanically processed and pressing is performed thereon, and then a heat treatment is applied at a temperature within the range of 200 °C to 2300 °C, both inclusive.

## Claims

1. A method of preparing a carbon-based material for a negative electrode including steps of:

   mixing a coating material made of one of pitch containing free carbon, pitch with a quinoline insoluble matter content of 2 % and more, or polymer with a carbon-based material made of at least either one of mesocarbon microbeads grown at a temperature within the range of the formation temperature to 2000 °C, both inclusive, and a carbon material; and
   graphitizing the carbon-based material to which the coating material is mixed;

   wherein the step of mixing the coating material with the carbon-based material includes a step of applying a heat treatment to graphite particles in an inert atmosphere where more than a specific concentration of an organic substance is diffused.

2. A method of preparing a carbon-based material for a negative electrode as claimed in claim 1, wherein the method is used in a manufacturing process of a secondary battery where each of a negative electrode and a positive electrode has a structure in which a mixture containing an active material is formed on both sides of band-shaped collector and the battery is formed by stacking the negative electrode and the positive electrode with a separator made of a microporous film interposed therebetween, being spirally rolled a number of times.

3. A method of preparing a carbon-based material for a negative electrode as claimed in claim 1, wherein a benzenoid compound having a structure including at least one or more benzene rings is used as the organic substance.

4. A method of preparing a carbon-based material for a negative electrode as claimed in claim 1, wherein a benzenoid compound having a structure including a bond of oxygen is used as the organic substance.

5. A method of preparing a carbon-based material for a negative electrode as claimed in claim 3, wherein either a nonbenzenoid compound, or a mixture of a nonbenzenoid compound and a benzenoid compound is contained as the organic substance.

6. A method of preparing a carbon-based material for a negative electrode as claimed in claim 4, wherein a compound in which a carbon atom (C) is replaced with another element is used as the benzenoid compound.

7. A method of preparing a carbon-based material for a negative electrode as claimed in claim 1, wherein a benzenoid compound having at least one or more structures in which a carbon atom (C) is replaced with at least one element selected from the group consisting of sulfur (S), nitrogen (N) and phosphorus (P) is used as the benzenoid compound.

8. A method of preparing a carbon-based material for a negative electrode as claimed in claim 1 including a step of forming the graphite particles by grinding artificial graphite or natural graphite.

9. A method of preparing a carbon-based material for a negative electrode as claimed in claim 1, wherein an oxidation treatment is performed on the graphite particles by one or more methods of an acid treatment, an ozone treatment or air oxidation before the heat treatment.

10. A method of preparing a carbon-based material for a negative electrode as claimed in claim 1, wherein natural graphite having a rhombohedral structure is used as the graphite particles.

11. A method of preparing a carbon-based material for a negative electrode as claimed in claim 1, wherein graphite powder with the tapping density of 1.0 g/$cm^3$ and more in tapping 40 times is used as the graphite particles.

12. A method of preparing a carbon-based material for a negative electrode as claimed in claim 1, wherein natural graphite with the tapping density of 0.9 g/$cm^3$ and more in tapping 20 times is used as the carbon-based material, and the natural graphite is mechanically processed and pressing is performed thereon, and then a heat treatment is applied at a temperature within the range of 200 °C to 2300 °C, both inclusive.

**13.** A method of preparing a carbon-based material for a negative electrode as claimed in claim 1 wherein natural graphite with the tapping density of 0.9 g/$cm^3$ and more in tapping 40 times is used as the carbon-based material, and the natural graphite is mechanically processed, and pressing is performed thereon, and then a heat treatment is applied at a temperature within the range of 200 °C to 2300 °C, both inclusive.

**14.** A method of preparing a carbon-based material for a negative electrode as claimed in claim 13, wherein the pressing is performed with a pressure of 1MPa and more.

**15.** A method of preparing a carbon-based material for a negative electrode as claimed in claim 1, wherein the method is used in a manufacturing process of a secondary battery where each of a negative electrode and a positive electrode has a structure in which a mixture containing an active material is formed on both sides of band-shaped collector and the battery is formed by stacking the negative electrode and the positive electrode with a separator made of a microporous film interposed therebetween, being spirally rolled a number of times.

**16.** A method of preparing a carbon-based material for a negative electrode as claimed in claim 15, wherein the positive electrode is formed to contain a lithium composite oxide expressed by $LiM_xO_y$ (where M denotes at least one element selected from the group consisting of Co, Ni, Mn, Fe, Cr, Al and Ti).

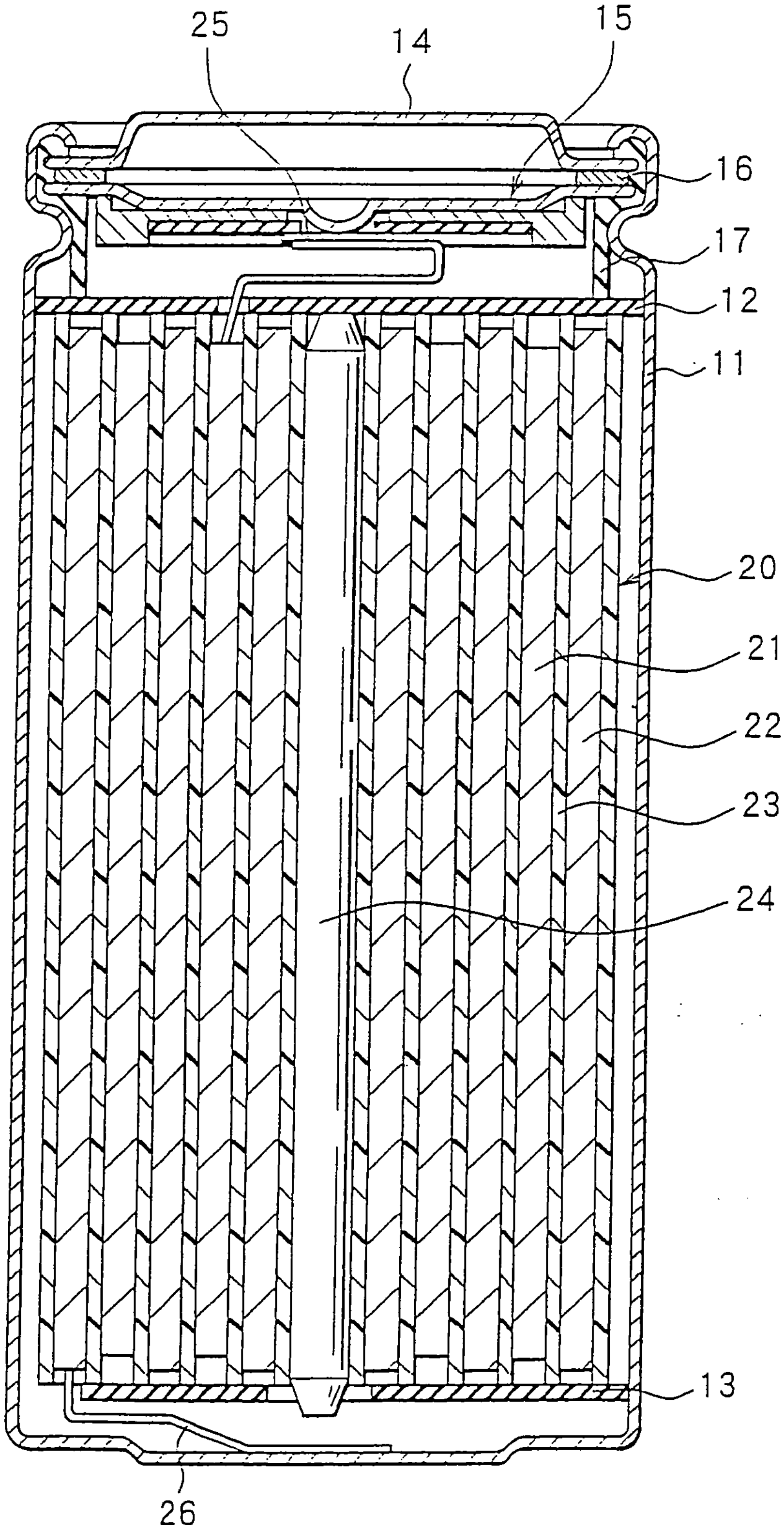


FIG.1

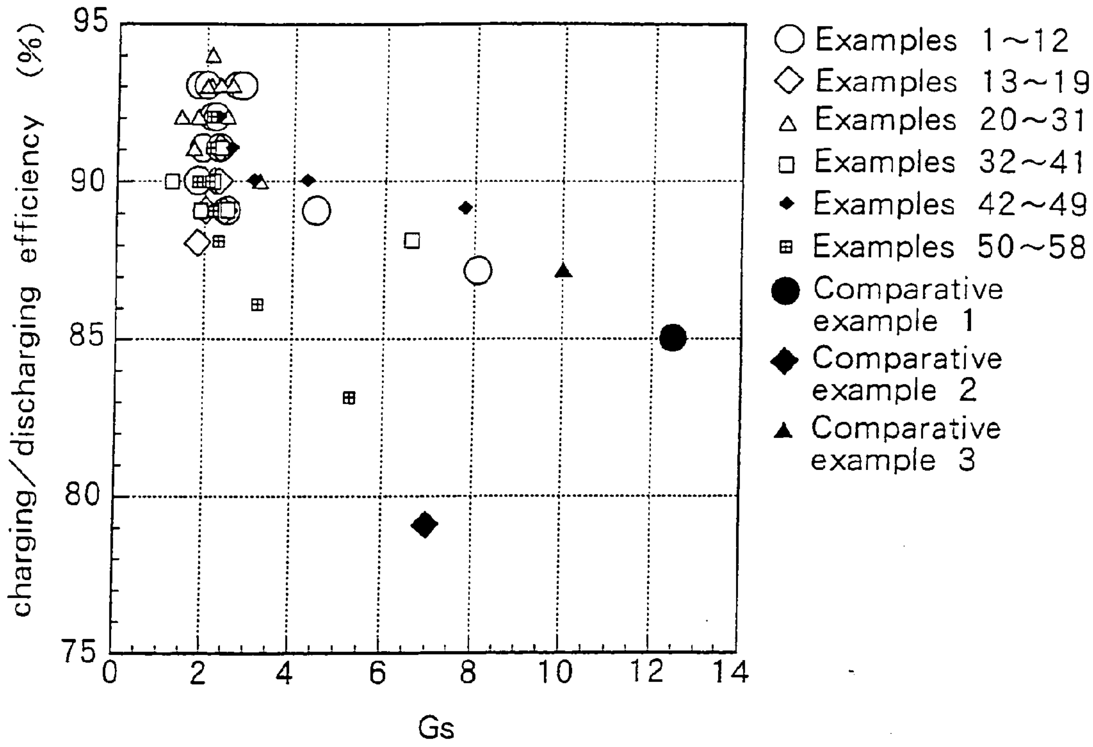
95
90
85
80
75
0
2
4
6
8
10
12
14
charging/discharging efficiency (%)
Gs
Examples 1~12
Examples 13~19
Examples 20~31
Examples 32~41
Examples 42~49
Examples 50~58
Comparative example 1
Comparative example 2
Comparative example 3

FIG.2

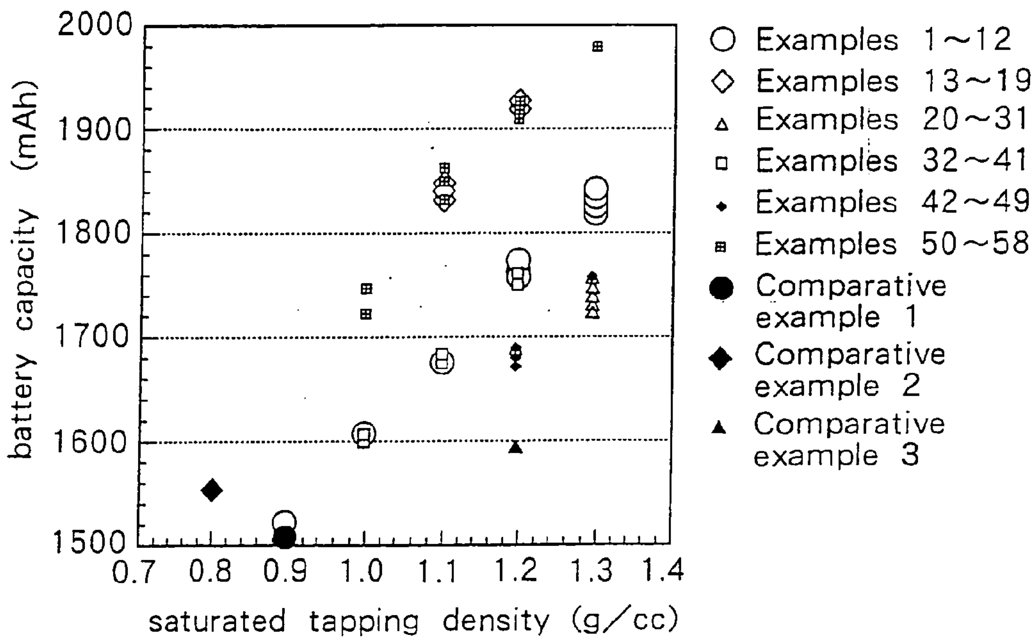
2000
1900
1800
1700
1600
1500
0.7
0.8
0.9
1.0
1.1
1.2
1.3
1.4
battery capacity (mAh)
saturated tapping density (g/cc)
Examples 1~12
Examples 13~19
Examples 20~31
Examples 32~41
Examples 42~49
Examples 50~58
Comparative example 1
Comparative example 2
Comparative example 3

FIG.3

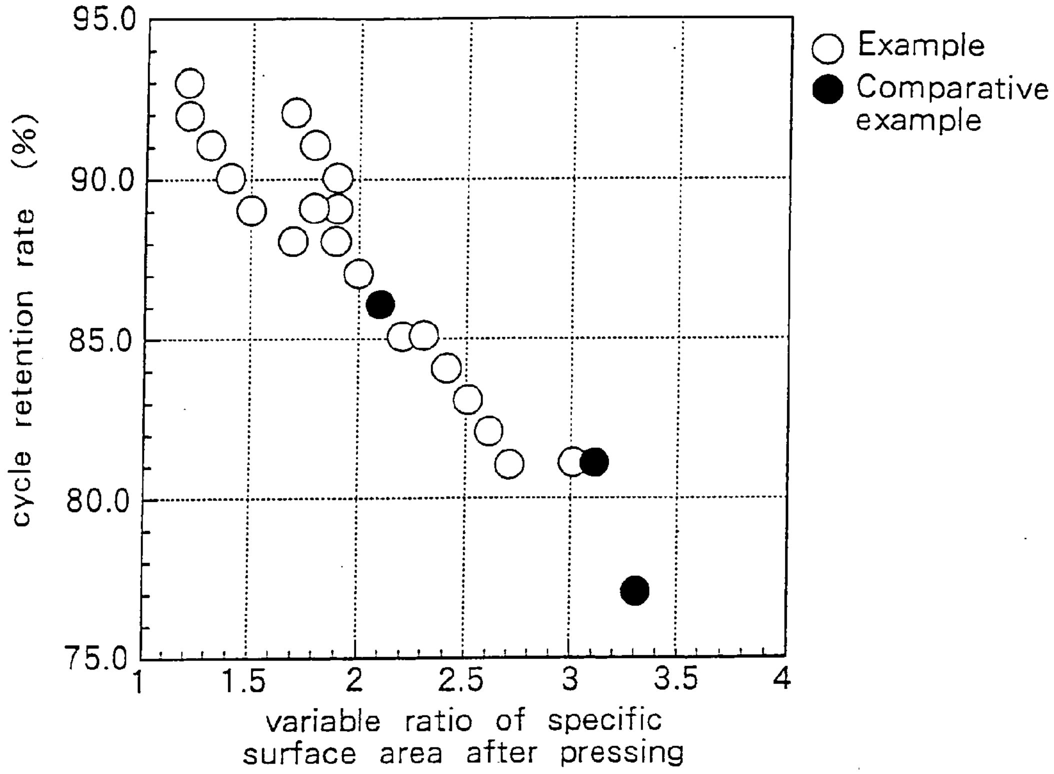
95.0
90.0
85.0
80.0
75.0
cycle retention rate (%)
1
1.5
2
2.5
3
3.5
4
variable ratio of specific surface area after pressing
Example
Comparative example

FIG.4

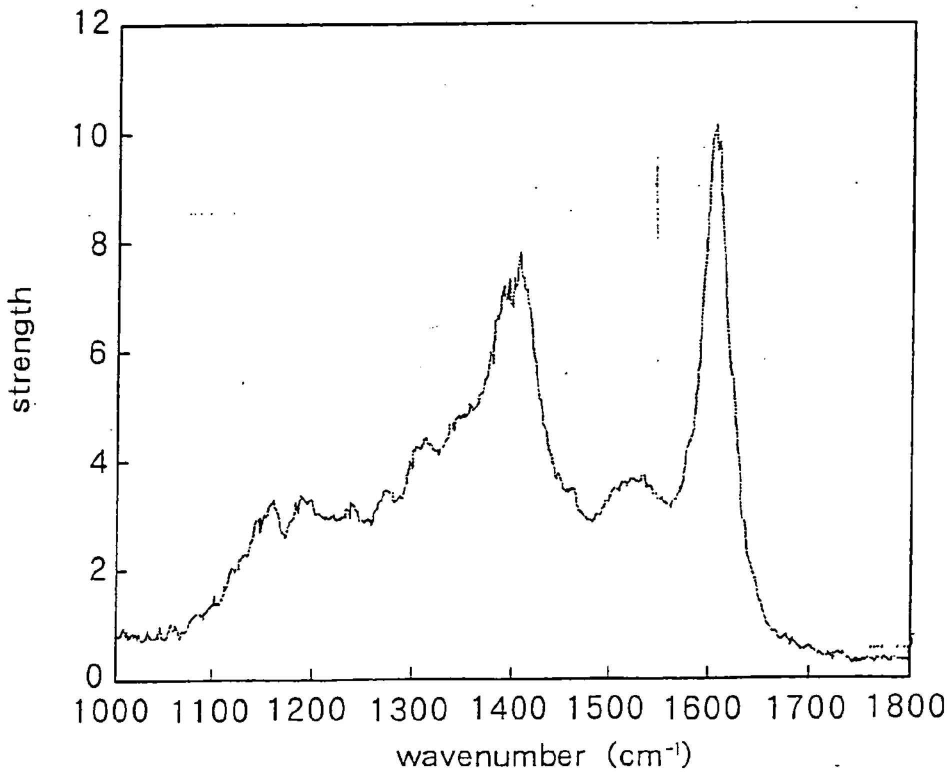
12
10
8
6
4
2
0
strength
1000 1100 1200 1300 1400 1500 1600 1700 1800
wavenumber (cm-1)

FIG.5

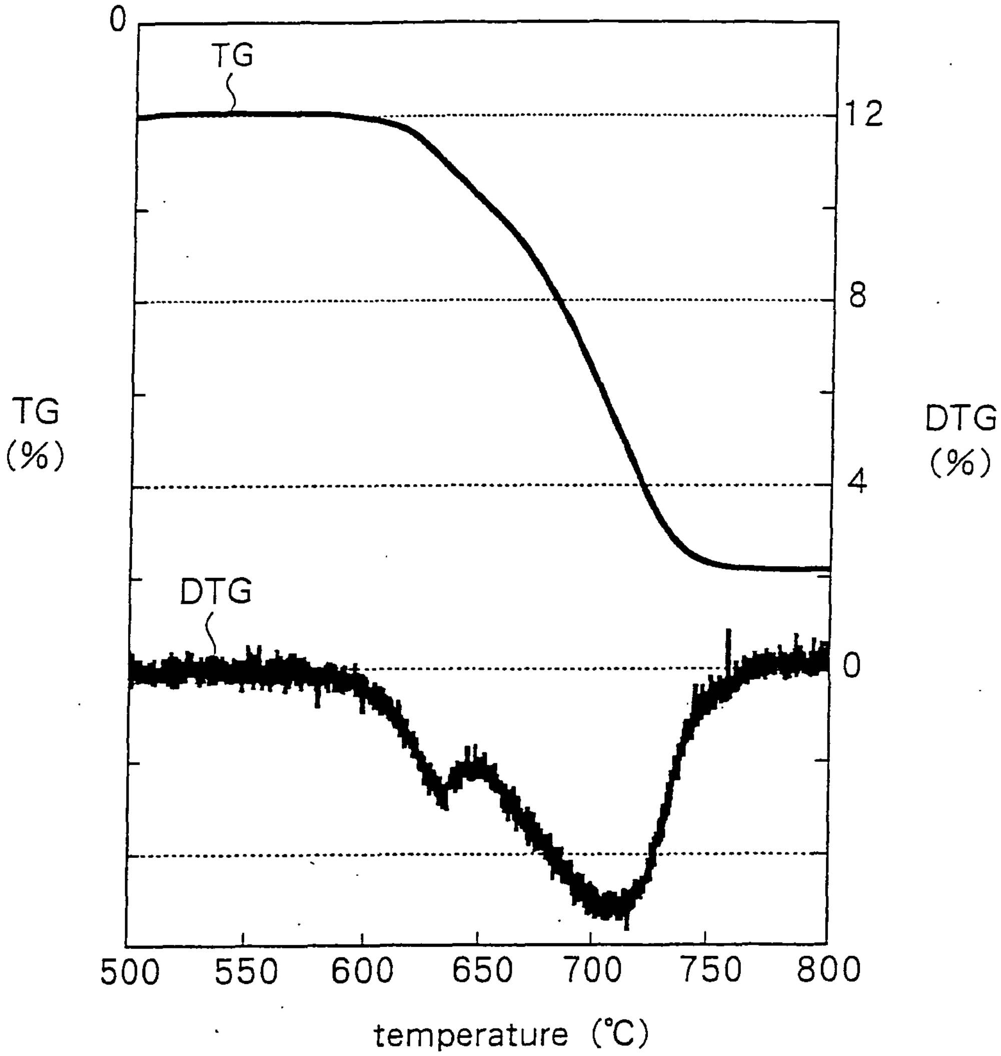


FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI9171815 B
- JP HEI9237638 B
- JP HEI1131511 B